# EUROPEAN PATENT APPLICATION

(11) **EP 4 439 824 A2**
(43) Date of publication of application: **02.10.2024**
(21) Application number: 24167895.2
(22) Date of filing: 29.03.2024
(51) Int. Cl.: H01M 50/211, H01M 50/242, H01M 50/291, H01M 50/507

(54) **BATTERY MODULE AND ELECTRIC DEVICE**

(30) Priority: 31.03.2023 CN 202310341612
(71) Applicant: Xiamen Ampack Technology Limited, Xiamen City, Fujian Province 361000 (CN)
(72) Inventor: LI, Kunlong, Xiamen City, Fujian Province, People s Republic of China, 361000 (CN); NONG, Wenbin, Xiamen City, Fujian Province, People s Republic of China, 361000 (CN); WANG, Pengfei, Xiamen City, Fujian Province, People s Republic of China, 361000 (CN)
(74) Representative: Icosa

(57) **Abstract**

A battery module (100) includes a housing (10), a cell assembly (20), a first elastic member (30), and a first conductive member (40). The cell assembly (20) is disposed in the housing (10). The cell assembly (20) includes a plurality of cell units (20a) arranged along a first direction (X). Each cell unit (20a) includes a cell (21). Along the first direction (X), the first elastic member (30) is disposed between the cell assembly (20) and the housing (10). The first elastic member (30) is configured to apply pressure to the cell assembly (20) and provide a swelling space for the cell. Along the first direction (X), an end of the first conductive member (40) is fixedly connected to the first elastic member (30). The first conductive member (40) includes a buffer part (401). The buffer part (401) is configured to be stretched along the first direction (X) by the first elastic member (30) when the cell assembly (20) swells.

## Description

### TECHNICAL FIELD

This application relates to the field of energy storage technologies, and in particular, to a battery module and an electric device.

### BACKGROUND

At present, battery modules are widely used in the fields of drones, electric vehicles, intelligent energy storage devices, and the like. In an existing battery module, electrical energy is transmitted via a busbar. Typically, the busbar is connected to a cell. Swelling of the cell results in a displacement of the cell, and the displacement is likely to affect the connection between the busbar and the cell and is not conducive to electrical energy transmission.

### SUMMARY

In view of this, it is necessary to provide a battery module and an electric device to improve connection stability and facilitate electrical energy transmission.

An embodiment of this application provides a battery module including a housing, a cell assembly, a first elastic member, and a first conductive member. The cell assembly is disposed in the housing. The cell assembly includes a plurality of cell units arranged along a first direction. Each cell unit includes a cell. Along the first direction, the first elastic member is disposed between the cell assembly and the housing. The first elastic member is configured to apply pressure to the cell assembly and provide a swelling space for the cell. Along the first direction, an end of the first conductive member is fixedly connected to the first elastic member. The first conductive member includes a buffer part. The buffer part is configured to be stretched along the first direction by the first elastic member when the cell assembly swells, buffering a pulling force applied by the first elastic member to the first conductive member and improving the connection stability between the first conductive member and the first elastic member, thereby facilitating electrical energy transmission.

Optionally, in some embodiments of this application, the buffer part includes a first folded member and a second folded member. The first folded member is connected to the second folded member to form a first included folding angle. When the buffer part is stretched, the first included folding angle gradually increases, reducing a stretching force applied to the buffer part, thereby facilitating stretching.

Optionally, in some embodiments of this application, the first conductive member is configured for electrical energy reception or an output of the cell assembly.

Optionally, in some embodiments of this application, the first conductive member includes a first conductive portion and a second conductive portion. The buffer part is disposed at the first conductive portion. The second conductive portion is connected to an electrode terminal of a cell close to the first elastic member, the second conductive portion is connected to the first conductive portion, and the buffer part can reduce a pulling force applied to the electrode terminal, helping to protect the electrode terminal and improving the connection stability between the electrode terminal and the first conductive member.

Optionally, in some embodiments of this application, the first conductive member includes a first fixed portion. The first fixed portion is connected to the first conductive portion. The first fixed portion is fixed to the first elastic member. Along the first direction, a projection of the first fixed portion is spaced apart from a projection of the cell housing, so that the first conductive member can be better stretched along the first direction.

Optionally, in some embodiments of this application, the first conductive portion is more prone to folding than the second conductive portion, and the first conductive portion is more prone to stretching, facilitating movement of the cell unit.

Optionally, in some embodiments of this application, the first conductive portion includes a first straight portion. The buffer part is disposed at the first straight portion.

Optionally, in some embodiments of this application, a second conductive member and a second elastic member are further included. The second elastic member is disposed between the housing and the cell assembly. The second elastic member and the first elastic member are disposed on two sides of the cell assembly along the first direction. The second conductive member is fixedly connected to the second elastic member. The second conductive member is connected to an electrode terminal of a cell close to the second elastic member. The cell assembly implements electrical energy reception or an output via the first conductive member and the second conductive member.

Optionally, in some embodiments of this application, the second conductive member and the first conductive member are disposed on a same side of the cell, facilitating spatial arrangement.

Optionally, in some embodiments of this application, a connecting terminal is further included. The connecting terminal is configured to be connected to an external device. Along the first direction, the second elastic member is located between the connecting terminal and the first elastic member. Along the first direction, the buffer part is closer to the first elastic member than the second elastic member, further facilitating stretching of the buffer part.

Optionally, in some embodiments of this application, the first elastic member includes a base portion and a folded portion. The base portion is connected to the folded portion. The folded portion is fixed to the housing. The base portion is configured to be able to apply pressure to the cell unit, and the folded portion is configured to be able to provide a swelling space for the cell unit. When the cell assembly swells, pressure applied to the cell assembly increases, and the folded portion provides a swelling space for the cell assembly, buffering the pressure applied to the cell assembly and reducing influence on the service life of the battery module. Pressure is continuously applied to the cell assembly via the base portion, and the cell assembly is in a pressed state and kept in dynamic balance, helping to prolong the service life of the battery module.

Optionally, in some embodiments of this application, the folded portion includes a first folded portion and a second folded portion. The first folded portion and the second folded portion are opposite each other along a second direction, and the second direction is perpendicular to the first direction. The first folded portion is connected to one side of the base portion, the second folded portion is connected to the other side of the base portion, and the first folded portion and the second folded portion can provide a swelling space for the cell assembly.

Optionally, in some embodiments of this application, each cell unit includes a bracket. The cell includes an electrode assembly, a cell housing, and an electrode terminal connected to the electrode assembly and 1 extending out of the cell housing. The cell housing includes a body portion and a first sealing portion. The electrode assembly is disposed at the body portion. The first sealing portion includes a first connecting portion. The electrode terminal extends out of the cell housing from the first connecting portion. The bracket includes a first portion. At least one the first connecting portion is covered by the first portion. At least one first portion is provided with a limiting portion. The first conductive member is disposed at the limiting portion so as to be conveniently fixed.

Optionally, in some embodiments of this application, the body portion includes a first wall and a second wall opposite each other along the second direction. The bracket includes a second portion. At least a part of the first wall is covered by the first portion. The housing includes a top wall. The second portion is connected to the top wall. The top wall, the second portion, and the cell unit are arranged along the second direction. Along the first direction, the second portion is configured to be movable relative to the top wall. This can reduce friction between the body portion and the housing during movement of the body portion, facilitating movement and protecting the body portion, thereby reducing the risk of influence of damage to the body portion on the use of the battery module.

Optionally, in some embodiments of this application, the second portion is in direct contact with the top wall, and the cell moves relative to the top wall via the second portion.

Optionally, in some embodiments of this application, the bracket is integrally formed with the cell, helping to enhance connection strength between the bracket and the cell.

Optionally, in some embodiments of this application, the bracket is an insulating bracket, helping to reduce the risk of a short circuit between the bracket and the cell.

Optionally, in some embodiments of this application, a sliding member is disposed between the second portion and the top wall. The sliding member reduces a frictional force between the second portion and the top wall, allowing the second portion movable relative to the top wall.

Optionally, in some embodiments of this application, in a third direction, the first wall and the second sealing portion are each partially provided with the second portion, thereby protecting a portion of the body portion and a portion of the second sealing portion, enhancing the connection strength between the bracket and the cell, and facilitating integral formation of the bracket and the cell.

Optionally, in some embodiments of this application, in a third direction, the first wall and the second sealing portion are each entirely provided with the second portion, so that the body portion and the second sealing portion can be better protected, and the connection strength between the bracket and the cell is better enhanced.

Optionally, in some embodiments of this application, the bracket includes a third portion, and at least a part of the second wall is covered by the third portion. Along the first direction, the third portion is configured to be movable relative to the housing. This can reduce friction between the body portion and the housing during movement of the body portion, facilitating movement and protecting the body portion, thereby reducing the risk of affecting the use of the battery module due to a damage to the body portion.

Optionally, in some embodiments of this application, a sliding member is disposed between the third portion and a bottom wall, and the sliding member reduces a frictional force between the third portion and the bottom wall, allowing the third portion to be opposite the bottom wall.

Optionally, in some embodiments of this application, in a third direction, the second wall and the second sealing portion are each partially provided with the third portion, thereby protecting a portion of the body portion and a portion of another second sealing portion, enhancing the connection strength between the bracket and the cell, and facilitating integral formation of the bracket and the cell.

Optionally, in some embodiments of this application, in a third direction, the second wall and the another second sealing portion are each entirely provided with the third portion, so that the body portion and the second sealing portion can be better protected, and the connection strength between the bracket and the cell is better enhanced.

Optionally, in some embodiments of this application, the first sealing portion includes a second connecting portion and a third connecting portion, and the bracket includes a first side portion and a second side portion. The first side portion covers the second connecting portion, and the second side portion covers the third connecting portion, so that the first sealing portion is partially protected.

Optionally, in some embodiments of this application, the bracket includes a fourth portion. The third wall is partially covered by the second portion. The fourth portion, the first portion, the first side portion, and the second side portion enclose a first space. The first connecting portion is partially located in the first space, so that a peripheral side of the first connecting portion can be protected. The first space provides a swelling space for the first sealing portion, thereby reducing influence of gas production and/or a free electrolyte in the cell on the sealing performance of the first sealing portion. The first space can also be used for heat dissipation of the cell.

Optionally, in some embodiments of this application, when viewed in a direction opposite to the third direction, the fourth portion is located between a fifth wall and a sixth wall in the first direction. The fourth portion does not exceed the fifth wall in the first direction, and the fourth portion does not exceed the sixth wall in the first direction. When adjacent cell housings are in contact connection, a gap is present between adjacent fourth portions, reducing influence of pressure mutually applied by the adjacent cell housings on the fourth portion, reducing an acting force applied to the first sealing portion, helping to protect the first sealing portion, and facilitating the connection stability between the bracket and the cell.

Optionally, in some embodiments of this application, the first elastic member includes a first connecting section. The first connecting section is connected to a side of the first folded portion away from the base portion. The first connecting section is fixed to the housing, so that an acting force applied to the folded portion can be transferred to the housing.

Optionally, in some embodiments of this application, the first connecting section is parallel to the base portion, facilitating deformation of the first elastic member in the first direction.

Optionally, in some embodiments of this application, the first folded portion includes a first folded section and a second folded section. The first folded section is connected to the base portion and the second folded section. The second folded section is connected to the first connecting section.

Optionally, in some embodiments of this application, the first folded section and the base portion form a first included angle A₁. The second folded section and the first connecting section form a second included angle B₁, and A₁≥B₁, helping to improve deformation resistance of the first folded section and helping to reduce the risk of deformation of the first elastic member in the first direction.

Optionally, in some embodiments of this application, the first folded section and the second folded section form a third included angle C₁, and C₁>A₁, helping to improve uniformity of deformation of the first folded portion.

Optionally, in some embodiments of this application, C₁=2A₁=2B₁, helping to further improve the uniformity of the deformation of the first folded portion.

Optionally, in some embodiments of this application, the housing includes a top wall. The top wall is provided with a fourth connecting portion. Along the first direction, a projection of the first connecting section overlaps a projection of the fourth connecting portion. The first connecting section is fixed to the fourth connecting portion, so that an acting force applied to the folded portion can be transferred to the top wall.

Optionally, in some embodiments of this application, the structural strength of the top wall is higher than the structural strength of the first elastic member, reducing the risk of deformation of the top wall caused by the acting force applied to the folded portion.

Optionally, in some embodiments of this application, the elastic member includes a second connecting section. The second connecting section is connected to a side of the second folded portion away from the base portion. The second connecting section is fixed to the housing, so that an acting force applied to the folded portion can be transferred to the housing.

Optionally, in some embodiments of this application, the second connecting section is parallel to the base portion, facilitating deformation of the first elastic member in the first direction.

Optionally, in some embodiments of this application, the housing includes a bottom wall. The top wall is opposite the bottom wall along the second direction. The bottom wall is provided with a fifth connecting portion. Along the first direction, a projection of the second connecting section overlaps a projection of the fifth connecting portion. The second connecting section is fixed to the fifth connecting portion, so that an acting force applied to the folded portion can be transferred to the bottom wall.

Optionally, in some embodiments of this application, the structural strength of the bottom wall is higher than the structural strength of the first elastic member, reducing the risk of deformation of the bottom wall caused by the acting force applied to the folded portion.

Optionally, in some embodiments of this application, the first folded portion and the second folded portion are the same in structure, facilitating uniformity of stress and deformation.

Optionally, in some embodiments of this application, the cell assembly includes a first cell unit and a second cell unit. Along the first direction, a second space is present between a bracket of the first cell unit and a bracket of the second cell unit. A sixth portion of the first cell unit faces a sixth portion of the second cell unit. The sixth portion of the second cell unit faces the sixth portion of the first cell unit.

Optionally, in some embodiments of this application, the cell assembly includes a third cell unit. The second cell unit and the third cell unit are arranged along the first direction, and a sixth portion of the third cell unit is away from a first portion of the second cell unit.

Optionally, in some embodiments of this application, along the third direction, an electrode terminal of the first cell unit, an electrode terminal of the second cell unit, and an electrode terminal of the third cell unit are stacked to form a first stack part. Along the third direction, a projection of the first stack part is located between a projection of the sixth portion of the second cell unit and a projection of a sixth portion of the third cell unit, reducing interference caused by the sixth portion to the first stack part, and facilitating welding of the first stack part.

Optionally, in some embodiments of this application, along the third direction, a projection of the first stack part is located between a projection of a first portion of the second cell unit and a projection of a first portion of the third cell unit, further facilitating welding of the first stack part, and reducing influence on brackets during welding.

Optionally, in some embodiments of this application, along the first direction, a third space is present between a bracket of the third cell unit and a bracket of the second cell unit. Along the third direction, a projection of the first stack part is located within a projection of the third space, further reducing the interference caused by the sixth portion to the first stack part, and further facilitating welding of the first stack part.

Optionally, in some embodiments of this application, the cell assembly includes a fourth cell unit. The third cell unit and the fourth cell unit are arranged adjacent to each other along the first direction. The sixth portion of the third cell unit faces a sixth portion of the fourth cell unit, and the sixth portion of the fourth cell unit faces the sixth portion of the third cell unit.

Optionally, in some embodiments of this application, along the first direction, a fourth space is present between the bracket of the third cell unit and a bracket of the fourth cell unit. An electrode terminal of the fourth cell unit is connected to the first stack part in a folding manner to form an overlap part.

Optionally, in some embodiments of this application, along the third direction, a projection of the overlap part is located between a projection of the sixth portion of the second cell unit and a projection of the sixth portion of the third cell unit, facilitating welding of the overlap part.

Optionally, in some embodiments of this application, along the third direction, a projection of the overlap part is located between a projection of the first portion of the second cell unit and a projection of the first portion of the third cell unit, further facilitating welding of the first stack part, and reducing influence on brackets during welding.

Optionally, in some embodiments of this application, along the third direction, a projection of the overlap part is located within a projection of the third space, further reducing the interference caused by the sixth portion to the overlap part, and further facilitating welding of the overlap part.

An embodiment of this application further provides an electric device including the battery module according to any one of some foregoing embodiments.

In the battery module and electric device, the buffer part is stretched along the first direction by the first elastic member when the cell assembly swells, buffering the pulling force applied by the first elastic member to the first conductive member and improving the connection stability between the first conductive member and the first elastic member, thereby facilitating electrical energy transmission.

### BRIEF DESCRIPTION OF DRAWINGS

FIG. 1 is a schematic structural diagram of a battery module in some embodiments.
FIG. 2 is a schematic exploded view of a battery module in some embodiments.
FIG. 3 is a schematic structural diagram of a bottom wall in some embodiments.
FIG. 4 is a partial schematic structural diagram of a battery module in some embodiments.
FIG. 5 is a partial schematic structural diagram of a battery module in some embodiments.
FIG. 6 is a structural schematic diagram of a cell in some embodiments.
FIG. 7 is a schematic structural diagram of a cell viewed in a direction Z' opposite to a third direction Z in some embodiments.
FIG. 8 is a schematic exploded view of a cell in some embodiments.
FIG. 9 is a schematic structural diagram of a cell in some other embodiments.
FIG. 10 is a schematic structural diagram of a cell and a bracket in some embodiments.
FIG. 11 is a schematic structural diagram of a cell and a bracket from another perspective in some embodiments in FIG. 9.
FIG. 12 is a schematic structural diagram of a cell and a bracket from still another perspective in some embodiments in FIG. 9.
FIG. 13 is a schematic structural diagram of a cell and a bracket from yet another perspective in some embodiments in FIG. 9.
FIG. 14 is a schematic structural diagram of a cell unit viewed in a direction Z' opposite to a third direction Z in some embodiments.
FIG. 15 is a schematic structural diagram of a portion of FIG. 10 in some embodiments.
FIG. 16 is a schematic structural diagram of another portion of FIG. 10 in some embodiments.
FIG. 17 is a structural schematic diagram of a cell unit and an elastic member in some embodiments.
FIG. 18 is a structural schematic diagram of an elastic member from another perspective in some embodiments.
FIG. 19 is a structural schematic diagram of an elastic member from still another perspective in some embodiments.
FIG. 20 is a structural schematic diagram of an elastic member in some embodiments.
FIG. 21 is cross-sectional view of a plurality of cell units in some embodiments.
FIG. 22 is an enlarged view of a portion in FIG. 21.
FIG. 23 is a partial schematic structural diagram of a battery module in some embodiments.
FIG. 24 is an enlarged view of a portion in FIG. 23.
FIG. 25 is a partial schematic structural diagram of a battery module from another perspective in some embodiments.
FIG. 26 is an enlarged view of a portion in FIG. 25.
FIG. 27 is a structural schematic diagram of a sampling member in some embodiments.
FIG. 28 is a partial schematic structural diagram of a battery module in some embodiments.
FIG. 29 is a structural schematic diagram of a first conductive member in some embodiments.
FIG. 30 is a structural schematic diagram of a second conductive member in some embodiments.
FIG. 31 is a structural schematic diagram of an electric device in some embodiments.

Reference signs of main components:

| | |
|---|---|
| Battery module | 100 |
| Housing | 10 |
| First side wall | 11 |
| Second side wall | 12 |
| Front wall | 13 |
| Top wall | 14 |
| Fourth connecting portion | 141 |
| Bottom wall | 15 |
| Fifth connecting portion | 151 |
| Cell assembly | 20 |
| Cell unit | 20a |
| First space | 20b |
| Second space | 20c |
| First stack part | 20d |
| Third space | 20e |
| Fourth space | 20f |
| overlap part | 20g |
| First cell unit | 201 |
| Second cell unit | 202 |
| Third cell unit | 203 |
| Fourth cell unit | 204 |
| Cell | 21 |
| Cell housing | 21a |
| Electrode assembly | 21b |
| Electrode terminal | 21c |
| Body portion | 211 |
| First wall | 211c |
| Second wall | 211d |
| Third wall | 211e |
| Fourth wall | 211f |
| Fifth wall | 211g |
| Sixth wall | 211h |
| First housing | 211a |
| First recess | 2111 |
| Second housing | 211b |
| Second recess | 2112 |
| First extension side | 2113 |
| Second extension side | 2114 |
| First sealing portion | 212 |
| First connecting portion | 212a |
| Second connecting portion | 212b |
| Third connecting portion | 212c |
| Second sealing portion | 213 |
| Bracket | 22 |
| First portion | 221 |
| First side portion | 222 |
| First gap | 222a |
| Second side portion | 223 |
| Second gap | 223a |
| Second portion | 224 |
| Third portion | 225 |
| Fourth portion | 226 |
| Fifth portion | 227 |
| Sixth portion | 228 |
| First side surface | 228a |
| Second side surface | 228b |
| Step portion | 228c |
| First step surface | 2281 |
| First limiting portion | 2281a |
| Second step surface | 2282 |
| Limiting portion | 229 |
| First limiting protrusion | 229a |
| Second limiting protrusion | 229b |
| First protrusion | 210 |
| Third recess | 220 |
| Second protrusion | 230 |
| Fourth recess | 240 |
| First elastic member | 30 |
| Base portion | 31 |
| Bulge | 311 |
| Folded portion | 32 |
| First folded portion | 321 |
| First folded section | 321a |
| Second folded section | 321b |
| First connecting section | 33 |
| Second folded portion | 322 |
| Third folded section | 322a |
| Fourth folded section | 322b |
| Second connecting section | 34 |
| First buffer member | 101 |
| Second buffer member | 102 |
| Connecting terminal | 103 |
| First conductive member | 40 |
| Buffer part | 401 |
| First folded member | 4011 |
| Second folded member | 4012 |
| First conductive portion | 41 |
| First straight portion | 411 |
| Second conductive portion | 42 |
| First fixed portion | 43 |
| Second elastic member | 50 |
| Second conductive member | 60 |
| Third conductive portion | 61 |
| Fourth conductive portion | 62 |
| Acquisition assembly | 70 |
| Wire | 71 |
| Sampling member | 72 |
| Opening | 72a |
| First component | 721 |
| First section | 721a |
| Third section | 721b |
| First bent portion | 7211 |
| Second component | 722 |
| Second section | 722a |
| Fourth section | 722b |
| Second bent portion | 7221 |
| Third component | 723 |
| Circuit board | 80 |
| Electric device | 200 |
| First direction | X |
| Second direction | Y |
| Third direction | Z |

This application is further described with reference to the accompanying drawings in the following specific some embodiments.

### DETAILEDDESCRIPTION OF EMBODIMENTS

The following specific some embodiments are exemplary and not restrictive, aiming to provide a basic understanding of this application but not to confirm critical or decisive elements of this application and not to limit the scope of protection. As long as there is no structural conflict, the various technical features mentioned in all embodiments can be combined in any manner.

When one component is assumed as being "disposed at/on/in" another component, the component may be provided directly at/on/in the another component or with a component possibly present therebetween. When one component is assumed as being "connected to" another component, it may be connected to the another component directly or with a component possibly present therebetween.

It should be understood that the terms "perpendicular and equal to" are used for describing an ideal state of two components. During actual production or use, an approximately perpendicular or equal state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

The term "parallel" is used for describing an ideal state of two components. During actual production or use, an approximately parallel state may be present between the two components. For example, with reference to the description of numerical values, "parallel" may indicate that an included angle between two straight lines is within a range of 180°±10°, "parallel" may alternatively indicate that a dihedral angle of two planes is within a range of 180°±10°, and "parallel" may further alternatively indicate that an included angle between a straight line and a plane is within a range of 180°±10°. Two components described as "parallel" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, the term "a plurality of" in the specification specifically indicates that there are two or more components when used for describing the number of components.

In a first direction X, there is a first direction X and a direction opposite to the first direction X. In a second direction Y, there is a second direction Y and a direction opposite to the second direction Y. In a third direction Z, there is a third direction Z and a direction opposite to the third direction Z.

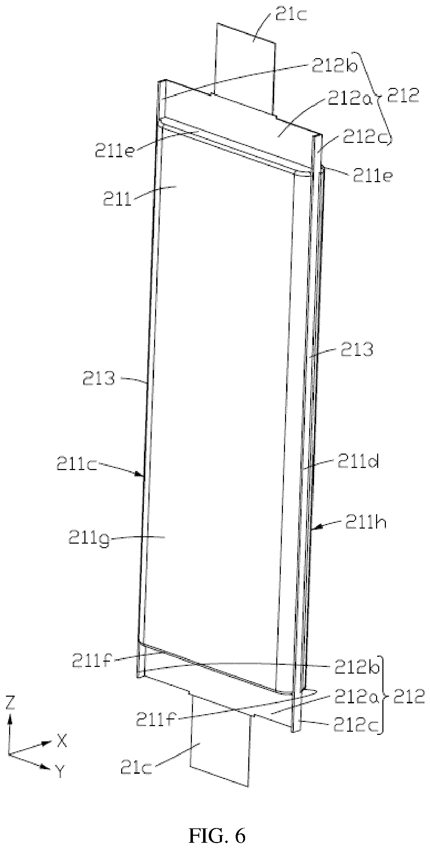

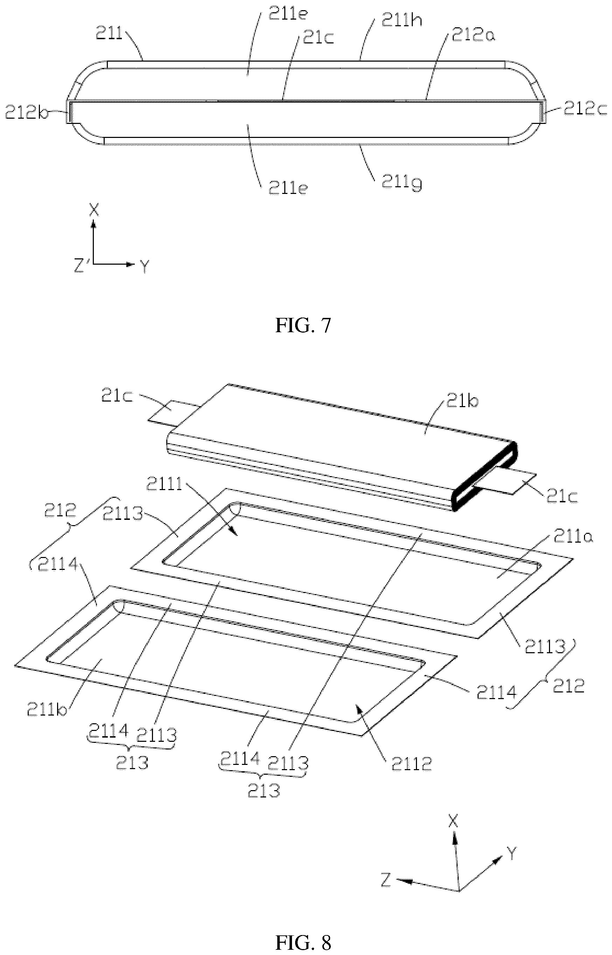

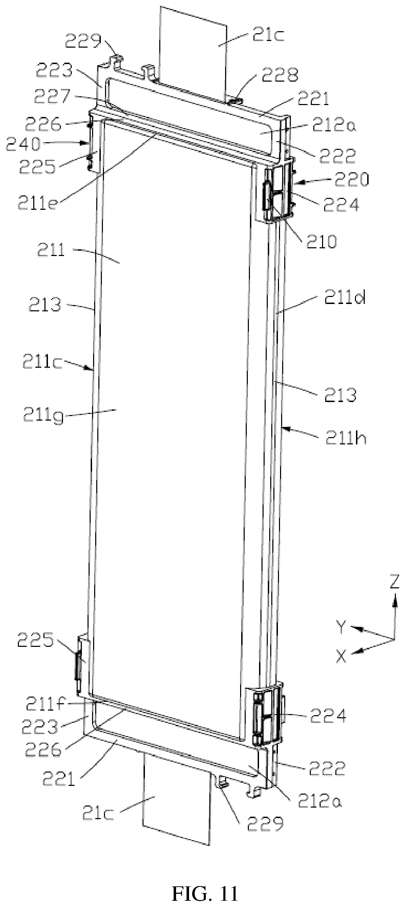

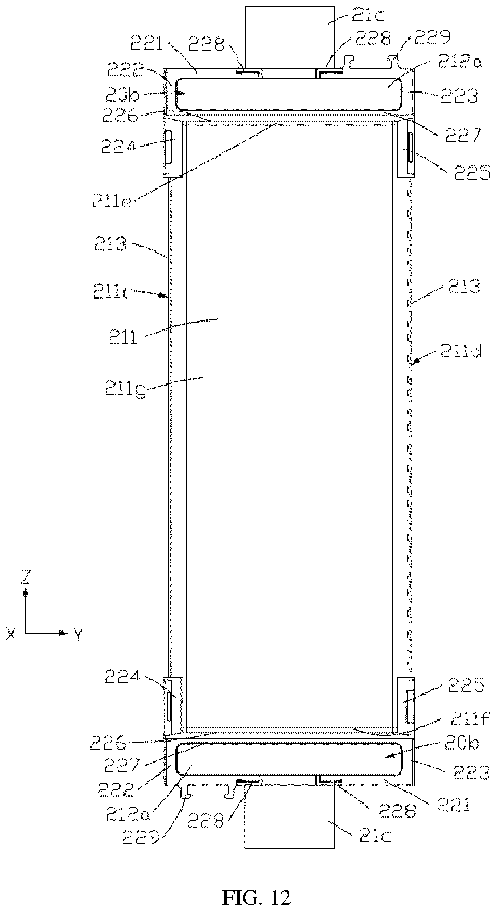

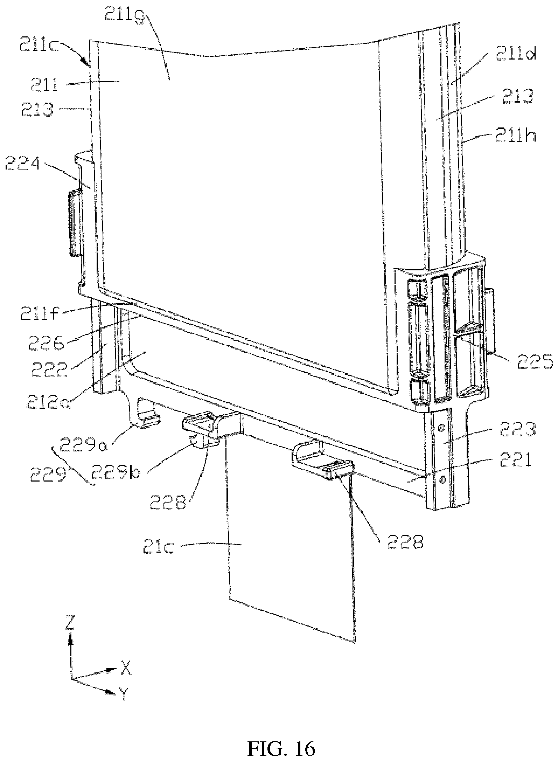

For ease of description, electrode terminals 21c in FIG. 6 to FIG. 8, FIG. 10 to FIG. 12, FIG. 15, and FIG. 16 are not folded.

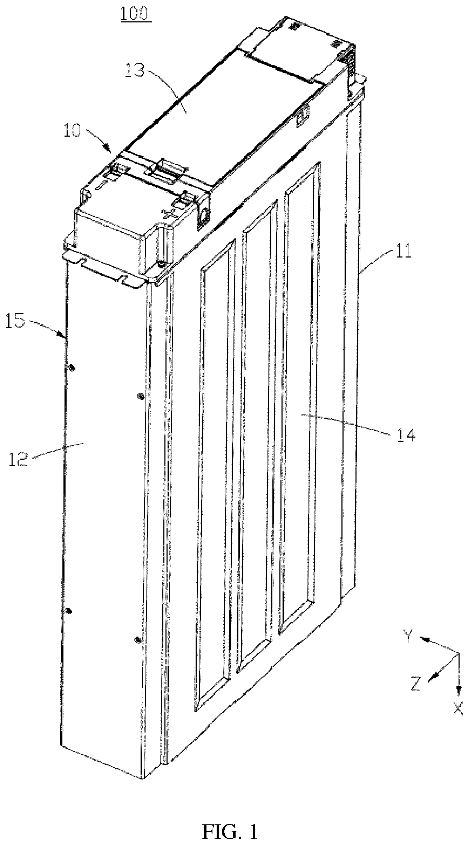

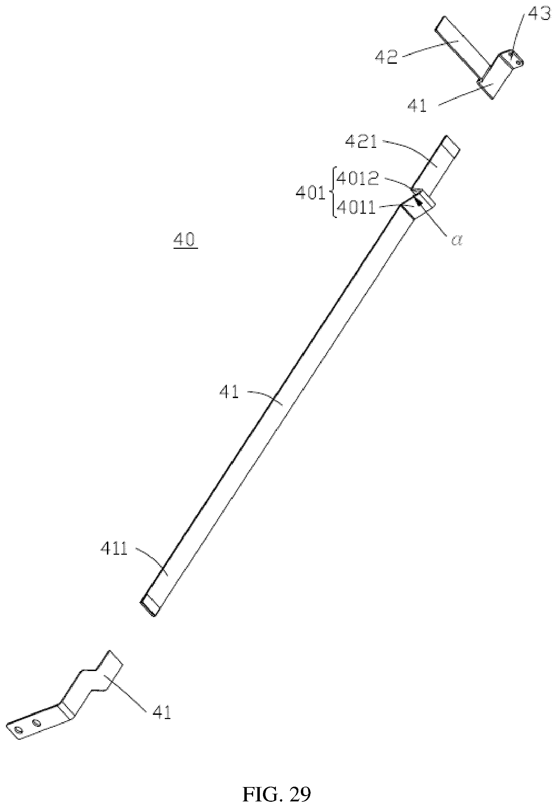

Referring to FIG. 1, FIG. 2, FIG. 5, and FIG. 29, an embodiment of this application provides a battery module 100 including a housing 10, a cell assembly 20, a first elastic member 30, and a first conductive member 40. The cell assembly 20 is disposed in the housing 10. The cell assembly 20 includes a plurality of cell units 20a arranged along a first direction X, where each cell unit 20a includes a cell 21. Along the first direction X, the first elastic member 30 is disposed between the cell assembly 20 and the housing 10, and the first elastic member 30 is configured to apply pressure to the cell assembly 20 and provide a swelling space for the cell 21. Along the first direction X, an end of the first conductive member 40 is fixed to the first elastic member 30. The first conductive member 40 includes a buffer part 401. The buffer part 401 is configured to be stretched along the first direction X by the first elastic member 30 when the cell assembly 20 swells, buffering a pulling force applied by the first elastic member 30 to the first conductive member 40 and improving the connection stability between the first conductive member 40 and the first elastic member 30, thereby facilitating electrical energy transmission.

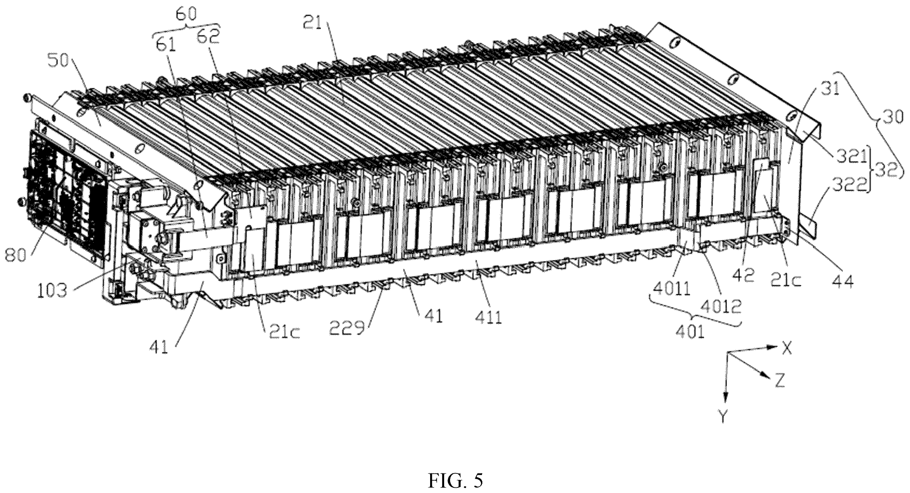

Referring to FIG. 5 and FIG. 6, in some embodiments, the cell 21 includes a pouch cell. The cell 21 includes a cell housing 21a, an electrode assembly 21b, and an electrode terminal 21c. The electrode assembly 21b is disposed at the cell housing 21a. The electrode terminal 21c is connected to the electrode assembly 21b and extends out of the cell housing 21a. The first conductive member 40 is connected to the electrode terminal 21c. The first conductive member 40 is configured to electrical energy reception or an output of the cell assembly 20. When the cell assembly 20 swells, the buffer part 401 can reduce a pulling force applied to the electrode terminal 21c, helping to protect the electrode terminal 21c and improving the connection stability between the electrode terminal 21c and the first conductive member 40.

Referring to FIG. 1 to FIG. 5, in some embodiments, the housing 10 includes a first side wall 11, a second side wall 12, a front wall 13, a top wall 14, a bottom wall 15, and a rear wall (not shown in the figures). The top wall 14 and the bottom wall 15 are arranged along second direction Y, and the first side wall 11 and the second side wall 12 are arranged along a third direction Z. The front wall 13 is connected to the first side wall 11 and the second side wall 12. The first direction X, the second direction Y, and the third direction Z are perpendicular to each other. The top wall 14 is connected to the front wall 13, the first side wall 11, and the second side wall 12. The bottom wall 15 is connected to the front wall 13, the first side wall 11, and the second side wall 12. The front wall 13, the first side wall 11, the second side wall 12, the top wall 14, the bottom wall 15, and the rear wall form an accommodating space, and the cell assembly 20 and the first elastic member 30 are disposed in the accommodating space.

Referring to FIG. 1 to FIG. 5, in some embodiments, the housing 10 includes a front wall 13, a first side wall 11, a second side wall 12, a top wall 14, and a bottom wall 15. The front wall 13 and the first elastic member 30 are arranged along the first direction X. The top wall 14 and the bottom wall 15 are arranged along the second direction Y. The first side wall 11 and the second side wall 12 are arranged along the third direction Z. The front wall 13 is connected to the first side wall 11 and the second side wall 12. The top wall 14 is connected to the front wall 13, the first elastic member 30, the first side wall 11, and the second side wall 12. The bottom wall 15 is connected to the front wall 13, the first elastic member 30, the first side wall 11, and the second side wall 12. The top wall 14, the bottom wall 15, the front wall 13, the first elastic member 30, the first side wall 11, and the second side wall 12 form an accommodating space, and the cell assembly 20 is disposed in the accommodating space. This helps to reduce rear walls, thereby simplifying an assembly process.

Referring to FIG. 6 to FIG. 8, in some embodiments, the cell 21 includes a pouch cell. The cell housing 21a includes a body portion 211. The body portion 211 is provided with an accommodating space, and the electrode assembly 21b is disposed in the body portion 211. The body portion 211 includes a first housing 211a and a second housing 211b. The first housing 211a is provided with a first recess 2111, and the second housing 211b is provided with a second recess 2112. The first housing 211a is connected to the second housing 211b to form the accommodating space. The electrode assembly 21b has a portion disposed at the first recess 2111 and another portion disposed at the second recess 2112.

In some embodiments, the body portion 211 is provided with an accommodating space. The body portion 211 includes a first housing 211a and a second housing 211b. The first housing 211a is provided with a first recess 2111, and the second housing 211b is flat. The first housing 211a is connected to the second housing 211b to form the accommodating space. The electrode assembly 21b is disposed at the first recess 2111.

In some embodiments, the cell housing 21a includes a first sealing portion 212 and a second sealing portion 213. The electrode terminal 21c extends out of the cell housing 21a from the first sealing portion 212. A peripheral side of the first housing 211a extends outwards to form a first extension side 2113. A peripheral side of the second housing 211b extends outwards to form a second extension side 2114. After the first housing 211a is connected to the second housing 211b, the first extension side 2113 and the second extension side 2114 overlap and are hermetically connected to form two first sealing portions 212 and two second sealing portions 213. The two first sealing portions 212 are disposed along the third direction Z. The two second sealing portions 213 are disposed along the second direction Y. One first sealing portion 212 is connected to the two second sealing portions 213, and the other first sealing portion 212 is connected to the two second sealing portions 213.

In some embodiments, the cell 21 includes two electrode terminals 21c. One electrode terminal 21c extends out of the cell housing 21a from one first sealing portion 212, and the other electrode terminal 21c extends out of the cell housing 21a from the other first sealing portion 212.

In some embodiments, the cell 21 includes two electrode terminals 21c. The two electrode terminals 21c extend out of the cell housing 21a from a same first sealing portion 212.

In some embodiments, the first extension side 2113 and the second extension side 2114 overlap and are hermetically connected to form one first sealing portion 212 and two second sealing portions 213. The two second sealing portions 213 are disposed along the second direction Y. The first sealing portion 212 is connected to the two second sealing portions 213. The cell 21 includes two electrode terminals 21c. The two electrode terminals 21c extend out of the cell housing 21a from the first sealing portion 212.

In some embodiments, the body portion 211 includes a first wall 211c, a second wall 211d, a third wall 211e, and a fourth wall 211f. The first wall 211c and the second wall 211d are disposed along the second direction Y. The fourth wall 211f and the third wall 211e are disposed along the third direction Z. One first sealing portion 212 is connected to the third wall 211e, and the other first sealing portion 212 is connected to the fourth wall 211f. One second sealing portion 213 is connected to the first wall 211c, and the other second sealing portion 213 is connected to the second wall 211d.

In some embodiments, the body portion 211 includes a fifth wall 211g and a sixth wall 211h, where the fifth wall 211g and the sixth wall 211h are disposed along the first direction X.

In some embodiments, the first sealing portion 212 includes a first connecting portion 212a, a second connecting portion 212b, and a third connecting portion 212c. The electrode terminal 21c extends out of the first connecting portion 212a. The second connecting portion 212b is connected to the third connecting portion 212c via the first connecting portion 212a. The second connecting portion 212b and the third connecting portion 212c are disposed along the second direction Y. The second connecting portion 212b is folded relative to the first connecting portion 212a, and the third connecting portion 212c is folded relative to the first connecting portion 212a. When viewed along a direction Z' opposite to the third direction Z, the second connecting portion 212b and the third connecting portion 212c are located on a same side of the first connecting portion 212a in the first direction X.

Referring to FIG. 5, in some embodiments, adjacent body portions 211 are in direct contact with each other, and this helps the body portions 211 to be pressed. Optionally, a fifth wall 211g of a cell housing 21a is in direct contact with a sixth wall 211h of a cell housing 21a adjacent thereto. Optionally, a fifth wall 211g of a cell housing 21a is in direct contact with a fifth wall 211g of a cell housing 21a adjacent thereto, and a sixth wall 211h of a cell housing 21a is in direct contact with a sixth wall 211h of a cell housing 21a adjacent thereto.

In some embodiments, pressure is present between adjacent cell housings 21a, so that a plurality of cell units 20a are in a pressed state, helping to prolong the service life of the cell units.

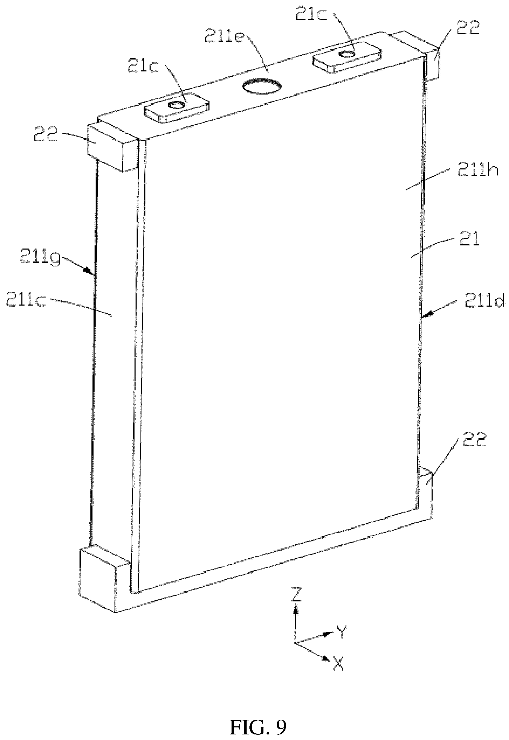

Referring to FIG. 9, in some embodiments, the cell 21 includes a prismatic cell. The prismatic cell includes a hard enclosure, and the electrode assembly 21b is disposed in the hard enclosure.

Referring to FIG. 6 and FIG. 10 to FIG. 16, in some embodiments, each cell unit 20a includes a bracket 22, where the bracket 22 is connected to the cell 21 to protect the cell 21.

In some embodiments, the bracket 22 is integrally formed with the cell 21, helping to enhance the connection strength between the bracket 22 and the cell 21. Optionally, the bracket 22 is integrally formed with the cell 21 through low-pressure injection molding.

In some embodiments, the bracket 22 includes an insulating bracket, reducing the risk of a short circuit between the bracket 22 and the cell 21.

In some embodiments, some insulating members may be provided on an outer surface of the body portion 211 to better protect the body portion 211, for example, insulating films.

In some embodiments, the bracket 22 includes a first portion 221, where the first portion 221 covers a portion of the first connecting portion 212a to protect the portion of the first connecting portion 212a. The electrode terminal 21c extends out of the first portion 221.

In some embodiments, the bracket 22 includes a first side portion 222 and a second side portion 223. The first side portion 222 covers the second connecting portion 212b, and the second side portion 223 covers the third connecting portion 212c, so that the first sealing portion 212 is partially protected.

In some embodiments, the first portion 221 is connected to the first side portion 222 and the second side portion 223, enhancing the structural strength of the bracket 22 and helping to protect the first sealing portion 212.

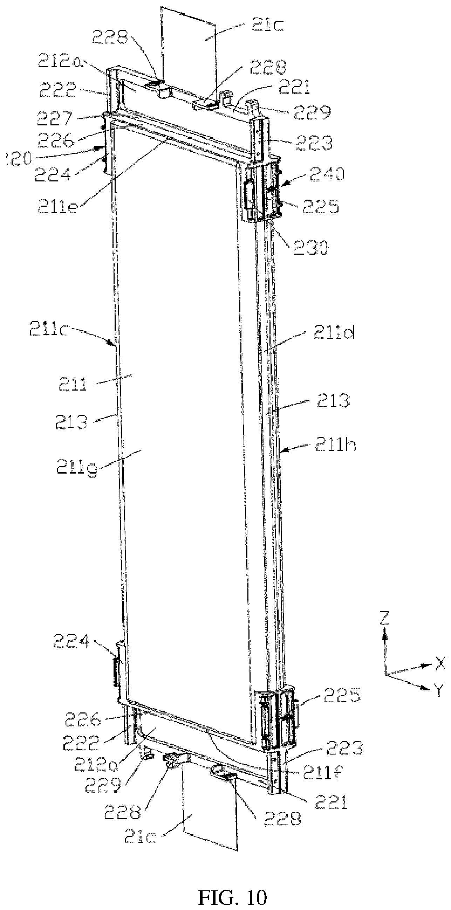

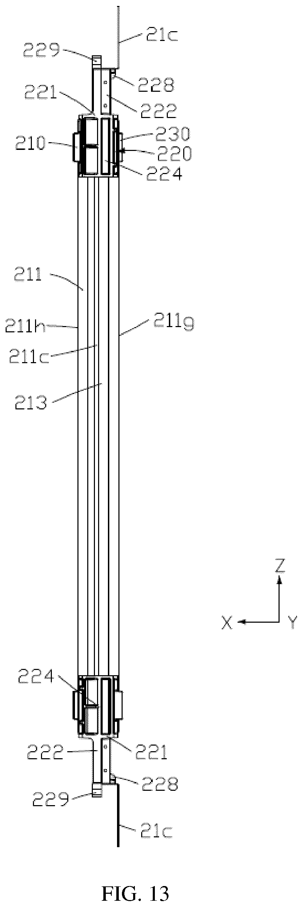

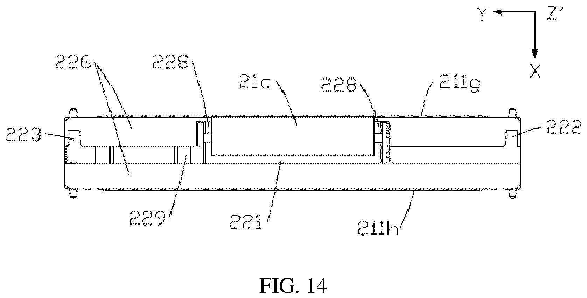

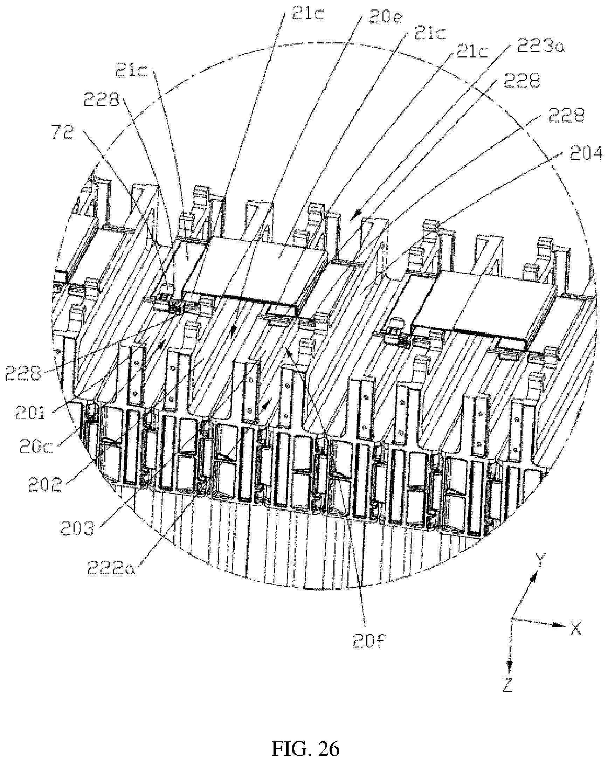

Referring to FIG. 10 to FIG. 16 and FIG. 26, electrode terminals 21c in FIG. 10 to FIG. 12 are not folded, and electrode terminals 21c in FIG. 13 and FIG. 14 are folded. In some embodiments, the bracket 22 includes a second portion 224. Along a direction Z' opposite to the third direction Z, the second portion 224 extends from the first side portion 222, and the second portion 224 covers the first wall 211c and the second sealing portion 213, thereby protecting the body portion 211 and the second sealing portion 213 and enhancing the connection strength between the bracket 22 and the cell 21. The second portion 224 is connected to the top wall 14. The top wall 14, the second portion 224, and the cell unit 20a are arranged along the second direction Y. Along the first direction X, the second portion 224 is configured to be movable relative to the top wall 14. When the cell 21 swells, the body portion 211 is movable relative to the top wall 14 via the second portion 224, facilitating movement and protecting the body portion 211, thereby reducing the risk of influence of damage to the body portion 211 on use of the battery module 100.

In some embodiments, the second portion 224 is in direct contact with the top wall 14, and when the cell 21 swells, the second portion 224 is movable relative to the top wall 14.

In some embodiments, a sliding member (not shown in the figure) is disposed between the second portion 224 and the top wall 14, and the sliding member reduces a frictional force between the second portion 224 and the top wall 14, facilitating movement of the second portion 224 relative to the top wall 14.

Optionally, in the third direction Z, the second portion 224 covers a part of the first wall 211c and a part of the second sealing portion 213 to protect a part of the body portion 211 and a part of the second sealing portion 213, thereby enhancing the connection strength between the bracket 22 and the cell 21 and facilitating integral formation of the bracket 22 and the cell 21.

Optionally, in the third direction Z, the first wall 211c and the second sealing portion 213 are each entirely provided with the second portion 224, so that the body portion 211 and the second sealing portion 213 can be better protected, and the connection strength between the bracket 22 and the cell 21 is better enhanced.

In some embodiments, when viewed along a direction Z' opposite to the third direction Z, the first side portion 222 does not exceed the second portion 224 in the first direction X, and a first gap 222a is formed between adjacent first side portions 222. When adjacent cell housings 21a are in contact connection and apply pressure to each other, an acting force applied to the first side portion 222 can be reduced, so that an acting force applied to the first sealing portion 212 is reduced, thereby helping to protect the first sealing portion 212. The first gap 222a also helps to cool the cell 21.

In some embodiments, the bracket 22 includes a third portion 225. Along the direction Z' opposite to the third direction Z, the third portion 225 extends from the second side portion 223, and the third portion 225 covers the second wall 211d and the other second sealing portion 213, so that the body portion 211 and the other second sealing portion 213 can be protected, and the connection strength between the bracket 22 and the cell 21 can be further enhanced. When viewed along the first direction X, a part of the body portion 211 is located between the second portion 224 and the third portion 225 in the second direction Y. The third portion 225 is connected to the bottom wall 15. The cell unit 20a, the third portion 225, and the bottom wall 15 are arranged along the second direction Y. Along the first direction X, the third portion 225 is configured to be movable relative to the bottom wall 15. When the cell 21 swells, the body portion 211 is movable relative to the bottom wall 15 via the third portion 225, facilitating movement and protecting the body portion 211, thereby reducing the risk that damage to the body portion 211 affects use of the battery module 100.

In some embodiments, when viewed along the first direction X, a part of the body portion 211 is located between the second portion 224 and the third portion 225 in the third direction Z, facilitating pressure relief.

In some embodiments, the third portion 225 is in direct contact with the bottom wall 15, and when the cell 21 swells, the third portion 225 is movable relative to the bottom wall 15.

In some embodiments, a sliding member (not shown in the figure) is disposed between the third portion 225 and the bottom wall 15, and the sliding member reduces a frictional force between the third portion 225 and the bottom wall 15, facilitating movement of the third portion 225 relative to the bottom wall 15.

Optionally, in the third direction Z, the third portion 225 covers a part of the second wall 211d and a part of the second sealing portion 213 to protect a part of the body portion 211 and a part of the second sealing portion 213, thereby enhancing the connection strength between the bracket 22 and the cell 21 and facilitating integral formation of the bracket 22 and the cell 21.

Optionally, in the third direction Z, the second wall 211d and the second sealing portion 213 are each entirely provided with the third portion 225, so that the body portion 211 and the second sealing portion 213 can be better protected, and the connection strength between the bracket 22 and the cell 21 is better enhanced.

In some embodiments, when viewed along a direction Z' opposite to the third direction Z, the second side portion 223 does not exceed the third portion 225 in the first direction X, and a second gap 223a is formed between adjacent second side portions 223. When adjacent cell housings 21a are in contact connection and apply pressure to each other, an acting force applied to the second side portion 223 can be reduced, so that an acting force applied to the first sealing portion 212 is reduced, thereby further helping to protect the first sealing portion 212. The second gap 223a also helps to cool the cell 21.

Referring to FIG. 10 to FIG. 13, in some embodiments, along the first direction X, the bracket 22 includes a first protrusion 210 and a third recess 220; the third recess 220 is disposed at the second portion 224; the first protrusion 210 extends from the second portion 224; when the body portions 211 of adjacent cells 21 are in contact connection, the first protrusion 210 is disposed in the third recess 220 of a bracket 22 adjacent thereto; and a gap is present between the first protrusion 210 and the third recess 220. The adjacent bracket 22 is positioned via the third recess 220 and the first protrusion 210, reducing disalignment between adjacent body portions 211 and helping a plurality of body portions 211 to apply pressure to each other. The gap between the first protrusion 210 and the third recess 220 can reduce stress of the bracket 22, improve the protection for the first sealing portion 212, and enhance the connection strength between the bracket 22 and the cell 21.

In some embodiments, along the first direction X, the bracket 22 includes a second protrusion 230 and a fourth recess 240, where the fourth recess 240 is disposed at the third portion 225, and the second protrusion 230 extends from the third portion 225. When the body portions of adjacent cells 21 are in contact connection, the second protrusion 230 is disposed in the fourth recess 240 of a bracket 22 adjacent thereto, and a gap is present between the second protrusion 230 and the fourth recess 240. The adjacent bracket 22 is further positioned via the fourth recess 240 and the second protrusion 230, further reducing disalignment between adjacent body portions 211 and further helping a plurality of body portions 211 to apply pressure to each other. The gap between the second protrusion 230 and the fourth recess 240 can reduce stress of the bracket 22, further improve the protection for the first sealing portion 212, and further enhance the connection strength between the bracket 22 and the cell 21.

In some embodiments, the bracket 22 includes a fourth portion 226, where the fourth portion 226 covers a portion of the third wall 211e and protects the body portion 211. One end of the first portion 221 connected to the first side portion 222, another end of the first portion 221 connected to the second side portion 223, and One end of the fourth portion 226 connected to the first side portion 222, another end of the fourth portion 226 connected to the second side portion 223, further enhancing the structural strength of the bracket 22 and further helping to protect the first sealing portion 212. The fourth portion 226, the first portion 221, the first side portion 222, and the second side portion 223 enclose a first space 20b, and a part of the first connecting portion 212a is located in the first space 20b. A peripheral side of the first connecting portion 212a is protected via the first portion 221, the first side portion 222, the second side portion 223, and the fourth portion 226, thereby reducing influence of gas production and/or a free electrolyte in the cell 21 on the sealing performance of the first sealing portion 212. The cell 21 can also be cooled via the first space 20b.

In some embodiments, the cell 21 includes an electrolyte, where the electrolyte is provided in the cell housing 21a. The electrode assembly 21b includes a first electrode plate, a separator, and a second electrode plate. The electrode assembly 21b is formed by winding or stacking the first electrode plate, the separator, and the second electrode plate. A part of the electrolyte infiltrates the first electrode plate, the separator, and the second electrode plate to transfer electrical ions. A part of the electrolyte is attached to a surface of the cell housing 21a and/or a surface of the electrode assembly 21b in a free state. The electrolyte in a free state is a free electrolyte. During cycling of a plurality of cells 21, the free electrolyte in each cell 21 is compressed. In this application, the first space 20b provides a swelling space for the first sealing portion 212, thereby reducing influence of swelling of the cell 21 on the sealing performance of the first sealing portion 212.

In some embodiments, the body portion 211 includes a plurality of third walls 211e, and the bracket 22 correspondingly includes a plurality of fourth portions 226. Optionally, some of the third walls 211e are provided with the fourth portions 226. Optionally, each third wall 211e is provided with one fourth portion 226.

In some embodiments, when viewed along a direction Z' opposite to the third direction Z, the fourth portion 226 is located between the fifth wall 211g and the sixth wall 211h in the first direction X, the fourth portion 226 does not exceed the fifth wall 211g in the first direction X, and the fourth portion 226 does not exceed the sixth wall 211h in the first direction X. When adjacent cell housings 21a are in contact connection, a gap is present between adjacent fourth portions 226, reducing influence of pressure mutually applied by the adjacent cell housings 21a on the fourth portion 226, reducing an acting force applied to the first sealing portion 212, helping to protect the first sealing portion 212, and facilitating the connection stability between the bracket 22 and the cell 21.

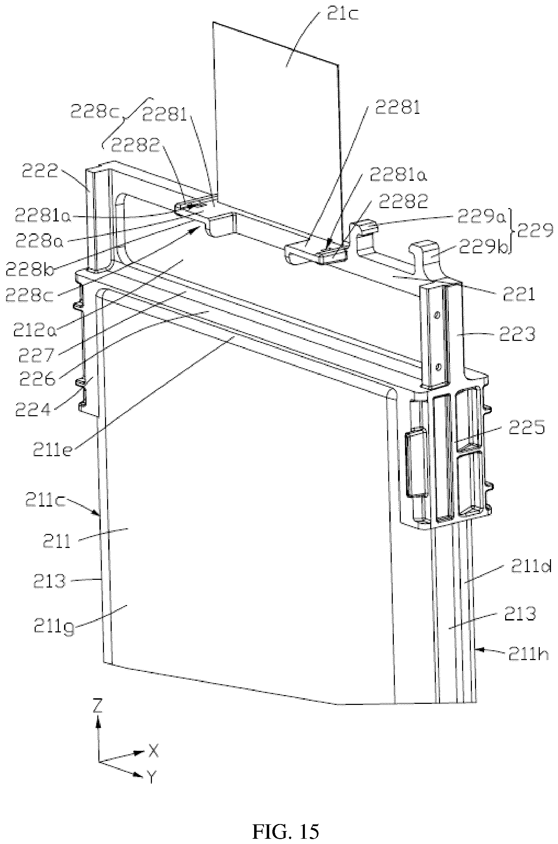

Referring to FIG. 15, in some embodiments, the bracket 22 includes a fifth portion 227, where the fifth portion 227 is connected to a side of the fourth portion 226 facing the first portion 221. The fifth portion 227 extends along the third direction Z from the fourth portion 226, and the fifth portion 227 covers a portion of the first connecting portion 212a. A part of the first sealing portion 212 extending out of the fourth portion 226 can be supported and protected by the fifth portion 227, thereby reducing influence of damage to the first sealing portion 212 on the air tightness of the cell 21.

In some embodiments, the body portion 211 includes a plurality of third walls 211e, and the bracket 22 correspondingly includes a plurality of fifth portions 227 and a plurality of fourth portions 226. Optionally, some of the fifth portions 227 are connected to the fourth portions 226. Optionally, each fifth portion 227 is connected to one fourth portion 226.

Referring to FIG. 10 to FIG. 16, in some embodiments, the cell unit 20a includes two brackets 22, where one bracket 22 is connected to a part of the first sealing portion 212, and the other bracket 22 is connected to a part of the other first sealing portion 212. One electrode terminal 21c extends out of the first sealing portion 212 and the bracket 22 along the third direction Z, and the other electrode terminal 21c extends out of the other first sealing portion 212 and the bracket 22 along the direction Z' opposite to the third direction Z. Through two brackets 22, the protection for the first sealing portion 212 is enhanced, and a swelling space is provided for the first sealing portion 212, thereby reducing influence of gas production and/or a free electrolyte in the cell 21 on the sealing performance of the first sealing portion 212 and also helping to cool the first sealing portion 212.

Referring to FIG. 13 to FIG. 16, in some embodiments, the bracket 22 includes a sixth portion 228, where the sixth portion 228 is connected to the first portion 221, and at least one electrode terminal 21c is disposed on the sixth portion 228. Along the third direction Z, a projection of the electrode terminal 21c overlaps a projection of the sixth portion 228.

In some embodiments, the bracket 22 includes a limiting portion 229, at least one the first portion 221 is provided with the limiting portion 229, and the first portion 221 and the limiting portion 229 are arranged along the third direction Z. The first conductive member 40 is disposed on the limiting portion 229.

In some embodiments, the limiting portion 229 includes a first limiting protrusion 229a and a second limiting protrusion 229b spaced apart along the second direction Y; the first conductive member 40 is disposed between the first limiting protrusion 229a and the second limiting protrusion 229b; and the position of the first conductive member 40 can be fixed to enhance the connection strength and stability between the first conductive member 40 and the bracket 22.

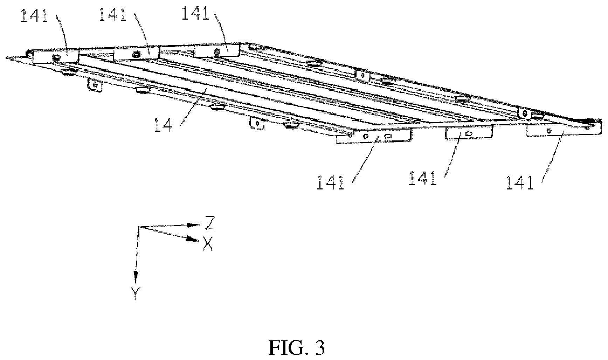

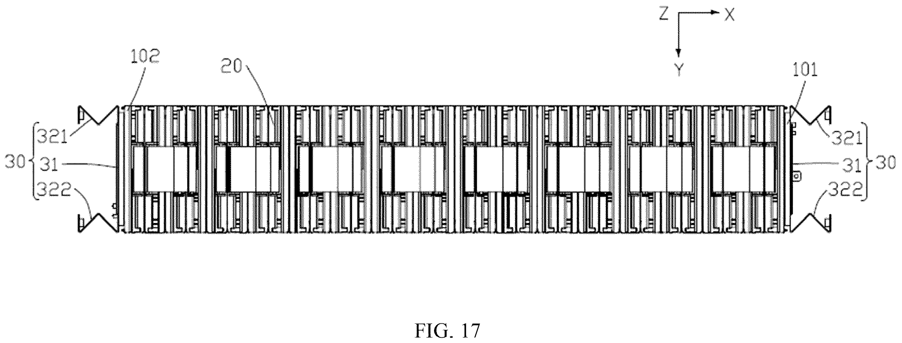

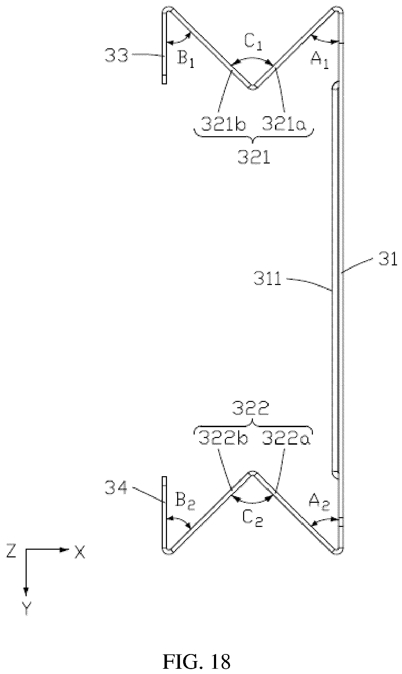

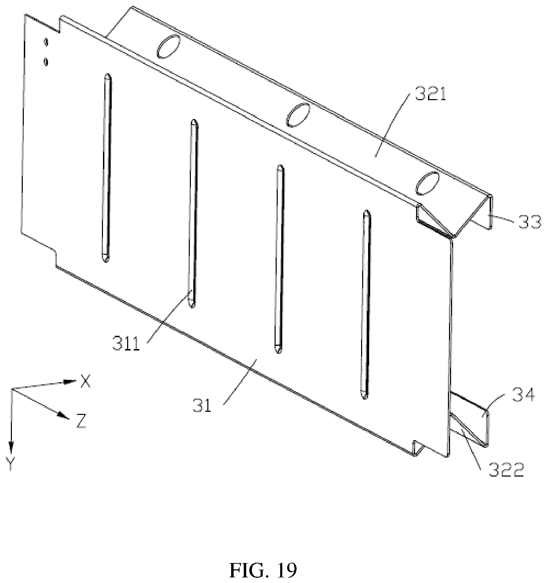

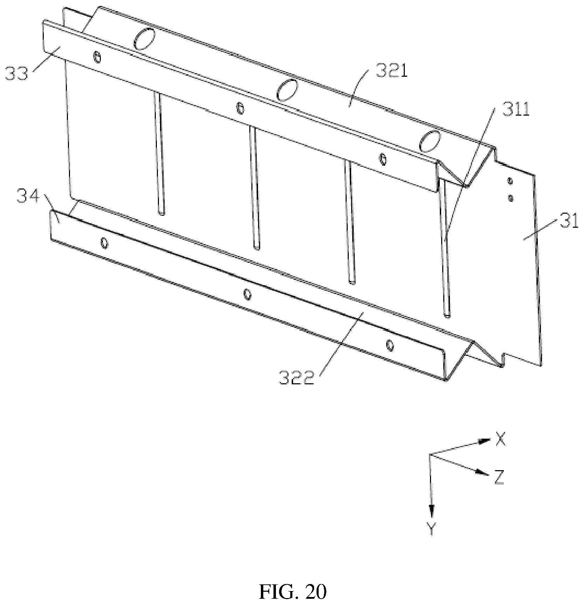

Referring to FIG. 3 to FIG. 5 and FIG. 17 to FIG. 20, in some embodiments, the first elastic member 30 is disposed on a side of the cell assembly 20 facing away from the front wall 13, the housing 10 and the first elastic member 30 form an accommodating space, and the cell assembly 20 is disposed in the accommodating space. The first elastic member 30 is fixedly connected to the top wall 14 and the bottom wall 15. The first elastic member 30 can apply pressure to the cell assembly 20 and contract according to swelling of the cell assembly 20 to provide a swelling space for the cell assembly 20.

In some embodiments, when the cell 21 does not swell, the first elastic member 30 does not apply pressure to the cell unit 20a; and when the cell 21 swells, the cell 21 compresses the first elastic member 30, and the first elastic member 30 provides pressure to the cell 21.

In some embodiments, when the cell 21 does not swell, the first elastic member 30 provides pressure to the cell 21; and when the cell 21 swells, the cell 21 compresses the first elastic member 30, and the first elastic member 30 provides higher pressure to the cell 21.

In some embodiments, the first elastic member 30 includes a base portion 31 and a folded portion 32; the base portion 31 is configured to be able to provide pressure to the cell assembly 20; the folded portion 32 is configured to provide a swelling space for the cell assembly 20; and the first conductive member 40 is fixedly connected to the base portion 31.

In some embodiments, when the cell assembly 20 swells, higher pressure is applied to the cell assembly 20, and the folded portion 32 provides a swelling space for the cell assembly 20, so that the pressure applied to the cell assembly 20 can be buffered, reducing influence on the service life of the battery module 100; and pressure is continuously applied to the cell assembly 20 via the base portion 31, the cell assembly 20 is in a pressed state and kept in dynamic balance, thereby helping to prolong the service life of the battery module 100.

In some embodiments, the base portion 31 is connected to the body portion 211 of an outermost cell 21. The base portion 31 is provided with a plurality of bulges 311 spaced apart along the third direction Z, and the bulges 311 are formed by a side, recessed away from the body portion 211, of the base portion 31 facing the body portion 211, enhancing the structural strength of the base portion 31 and reducing the risk of deformation of the base portion 31 caused by non-uniform stress of the base portion 31.

In some embodiments, the folded portion 32 includes a first folded portion 321 and a second folded portion 322, where the first folded portion 321 is opposite to the second folded portion 322 along the second direction Y. The first folded portion 321 is connected to one side of the base portion 31, and the second folded portion 322 is connected to another side of the base portion 31. The first folded portion 321 and the second folded portion 322 are fixedly connected to the housing 10. The first folded portion 321 and the second folded portion 322 can act on the cell assembly 20 via the base portion 31. The first folded portion 321 and the second folded portion 322 can provide a swelling space for the cell assembly 20.

In some embodiments, the first elastic member 30 includes a first connecting section 33; the first connecting section 33 is connected to a side of the first folded portion 321 facing away from the base portion 31; the first connecting section 33 is fixed to the top wall 14; and the first folded portion 321 is fixed to the top wall 14 via the first connecting section 33, so that an acting force applied to the folded portion 32 can be transferred to the housing 10.

In some embodiments, the first connecting section 33 is parallel to the base portion 31, facilitating deformation of the first elastic member 30 in the first direction X.

In some embodiments, the first elastic member 30 includes a second connecting section 34; the second connecting section 34 is connected to a side of the second folded portion 322 facing away from the base portion 31; the second connecting section 34 is fixed to the bottom wall 15; and the second folded portion 322 is fixed to the bottom wall 15 via the second connecting section 34, so that an acting force applied to the folded portion 32 can be transferred to the housing 10.

In some embodiments, the second connecting section 34 is parallel to the base portion 31, facilitating deformation of the first elastic member 30 in the first direction.

In some embodiments, the top wall 14 is provided with a fourth connecting portion 141; along the first direction X, a projection of the first connecting section 33 overlaps a projection of the fourth connecting portion 141; and the first connecting section 33 is fixedly connected to the fourth connecting portion 141, for example, fixed by welding, fixed by adhesion, fixed by abutment, fixed by clamping, or fixed by a screw. Optionally, the top wall 14 is provided with a plurality of fourth connecting portions 141, the plurality of fourth connecting portions 141 are spaced apart along the third direction Z, and the first connecting section 33 is fixedly connected to the plurality of fourth connecting portions 141, enhancing the connection strength between the first connecting section 33 and the top wall 14.

In some embodiments, along the first direction X, two sides of the top wall 14 are each provided with the fourth connecting portion 141.

In some embodiments, the fourth connecting portion 141 is closer to the cell assembly 20 than the first connecting section 33, facilitating fixation of the fourth connecting portion 141 to the first connecting section 33.

In some embodiments, the structural strength of the top wall 14 is higher than the structural strength of the first elastic member 30, reducing the risk of deformation of the top wall 14 caused by the acting force applied to the folded portion 32.

In some embodiments, the top wall 14 is thicker than the thickest one of the base portion 31, the first folded portion 321, and the first connecting section 33, enhancing the structural strength of the top wall 14 and reducing the risk of deformation of the top wall 14 caused by the acting force applied to the first folded portion 321.

In some embodiments, the bottom wall 15 is provided with a fifth connecting portion 151; along the first direction X, a projection of the second connecting section 34 overlaps a projection of the fifth connecting portion 151; and the second connecting section 34 is fixedly connected to the fifth connecting portion 151, for example, fixed by welding, fixed by adhesion, fixed by abutment, fixed by clamping, or fixed by a screw. Optionally, the bottom wall 15 is provided with a plurality of fifth connecting portions 151, the plurality of fifth connecting portions 151 are spaced apart along the third direction Z, and the second connecting section 34 is fixedly connected to the plurality of fifth connecting portions 151, enhancing the connection strength between the second connecting section 34 and the bottom wall 15.

In some embodiments, along the first direction X, two sides of the bottom wall 15 are each provided with the fifth connecting portion 151.

In some embodiments, the fifth connecting portion 151 is closer to the cell assembly 20 than the second connecting section 34, facilitating fixation of the fifth connecting portion 151 to the second connecting section 34.

In some embodiments, the structural strength of the bottom wall 15 is higher than the structural strength of the first elastic member 30, reducing the risk of deformation of the bottom wall 15 caused by the acting force applied to the folded portion 32.

In some embodiments, the bottom wall 15 is thicker than the thickest one of the base portion 31, the second folded portion 322, and the second connecting section 34, enhancing the structural strength of the bottom wall 15 and reducing the risk of deformation of the bottom wall 15 caused by the acting force applied to the second folded portion 322.

In some embodiments, the first folded portion 321 includes a first folded section 321a and a second folded section 321b, where the first folded section 321a is connected to the base portion 31, and the second folded section 321b is connected to the first folded section 321a and the first connecting section 33.

The first folded section 321a and the base portion 31 form a first included angle A₁, the second folded section 321b and the first connecting section 33 form a second included angle B₁, and A₁≥B₁, helping to improve deformation resistance of the first folded section 321a and helping to reduce the risk of deformation of the first elastic member 30 in the first direction X.

In some embodiments, the first folded section 321a and the second folded section 321b form a third included angle C₁, and C₁>A₁, helping to improve uniformity of deformation of the first folded portion 321.

In some embodiments, C₁=2B₁=2A₁, helping to further improve the uniformity of the deformation of the first folded portion 321.

In some embodiments, the second folded portion 322 includes a third folded section 322a and a fourth folded section 322b, where the third folded section 322a is connected to the base portion 31, and the fourth folded section 322b is connected to the third folded section 322a and the second connecting section 34. The third folded section 322a and the base portion 31 form a first included angle A₂, the fourth folded section 322b and the second connecting section 34 form a second included angle B₂, and third folded section 322a and the fourth folded section 322b form a third included angle C₂. A₂≥B₂, helping to improve deformation resistance of the third folded section 322a and helping to reduce the risk of deformation of the first elastic member 30 in the first direction X.

In some embodiments, C₂>A₂, helping to improve uniformity of deformation of the second folded portion 322.

In some embodiments, C₂=2B₂=2A₂, helping to further improve the uniformity of the deformation of the second folded portion 322.

In some embodiments, the second folded portion 322 is disposed at a same angle as the first folded portion 321. When stressed, the first folded portion 321 and the second folded portion 322 can be stressed uniformly and deform uniformly, reducing the risk of rotation of the elastic member 30 caused by non-uniform deformation. Optionally, A₁=A₂, B₁=B₂, and C₁=C₂.

In some embodiments, the battery module 100 includes a first buffer member 101, where the first buffer member 101 is disposed between the first elastic member 30 and an outermost cell 21, and the first buffer member 101 and the first elastic member 30 are arranged along the first direction X. The first buffer member 101 is in direct contact with the base portion 31 and the body portion 211 of the outermost cell 21. When the cell 21 swells, the first buffer member 101 can be compressed to further provide a swelling space for the cell 21 and further apply pressure to the cell 21. Optionally, the first buffer member 101 includes foam.

In some embodiments, the battery module 100 includes a second elastic member 50; along the first direction X, the second elastic member 50 is disposed between the front wall 13 and the cell assembly 20; and the second elastic member 50 is fixedly connected to the top wall 14 and the bottom wall 15. The second elastic member 50 can further apply pressure to the cell assembly 20 and contract according to swelling of the cell assembly 20 to further provide a swelling space for the cell assembly 20, helping to prolong the service life of the battery module.

In some embodiments, the second elastic member 50 is the same as the first elastic member 30 in structure.

In some embodiments, the battery module 100 includes a second buffer member 102, where the second buffer member 102 is disposed between the second elastic member 50 and another outermost cell 21, and the second elastic member 50 and the second buffer member 102 are arranged along the first direction X. The second buffer member 102 is in direct contact with the base portion of the second elastic member 50 and the body portion 211 of the outermost cell 21. When the cell 21 swells, the second buffer member 102 can be compressed to further provide a swelling space for the cell 21 and further apply pressure to the cell 21. Optionally, the second buffer member 102 includes foam.

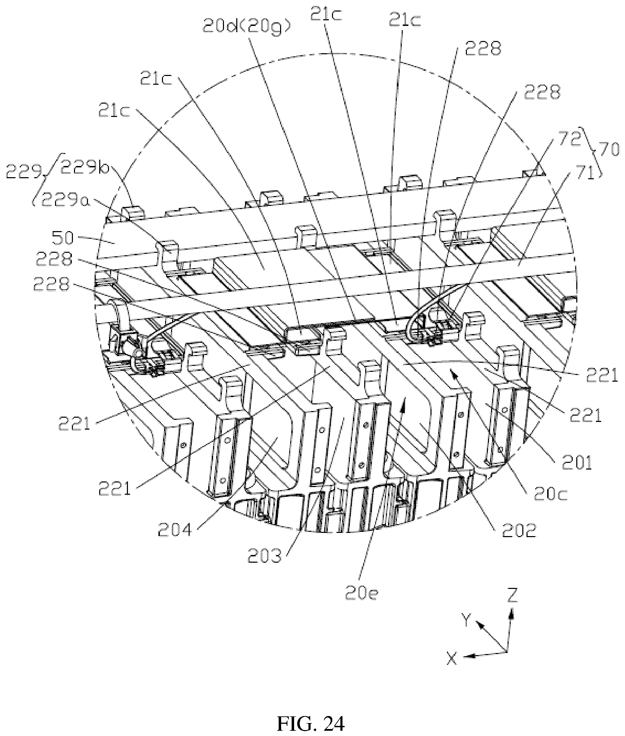

Referring to FIG. 5, FIG. 24, FIG. 28, and FIG. 29, in some embodiments, the buffer part 401 includes a first folded member 4011 and a second folded member 4012. The first folded member 4011 is connected to the second folded member 4012 to form a first included folding angle α, and when the buffer part 401 is stretched, the first included folding angle α gradually increases, reducing a stretching force applied to the buffer part 401, thereby facilitating stretching. Optionally, the buffer part 401 is a V-shaped structure.

In some embodiments, the buffer part 401 includes a third folded member (not shown in the figure). The third folded member is connected to the first folded member 4011 and the second folded member 4012 to form a second included folding angle and a third included folding angle. When the buffer part 401 is stretched, the second included folding angle and the third included folding angle gradually increase, increasing a stretching length, thereby further buffering a pulling force applied from the first elastic member 30 to the electrode terminal 21c of the first conductive member 40. Optionally, the buffer part 401 is a concave structure.

In some embodiments, the first conductive member 40 includes a first conductive portion 41 and a second conductive portion 42, and the buffer part 401 is disposed at the first conductive portion 41. The first conductive portion 41 is fixedly connected to the bracket 22. The second conductive portion 42 is connected to the electrode terminal 21c of the cell 21 close to the first elastic member 30, and the second conductive portion 42 is connected to the first conductive portion 41.

In some embodiments, the first conductive portion 41 includes a first straight portion 411, where the first straight portion 411 is disposed between the first limiting protrusion 229a and the second limiting protrusion 229b, and the buffer part 401 is disposed at the first straight portion 411. Along the first direction X, the buffer part 401 is located between the limiting portions 229 of adjacent brackets 22.

In some embodiments, the first conductive portion 41 is more prone to folding than the second conductive portion 42. The first conductive portion 41 is more prone to folding. Therefore, when the cell 21 swells, the first conductive portion 41 is more prone to stretching, facilitating movement of the cell unit 20a. Optionally, the first conductive portion 41 includes a soft copper bar. Optionally, the soft copper bar is formed by stacking a plurality of thin copper bars, where the thin copper bars have a thickness less than 0.5 mm. Optionally, the second conductive portion 42 includes a hard copper bar. Optionally, the hard copper bar is integrally formed.

In some embodiments, the first conductive portion 41 is an integrally formed structure. In some embodiments, the first conductive portion 41 is configured as a multi-section structure, where a plurality of sections of the first conductive portion 41 are connected by welding, for example, laser welding.

In some embodiments, the first conductive portion 41 and the second conductive portion 42 are connected by welding, for example, laser welding.

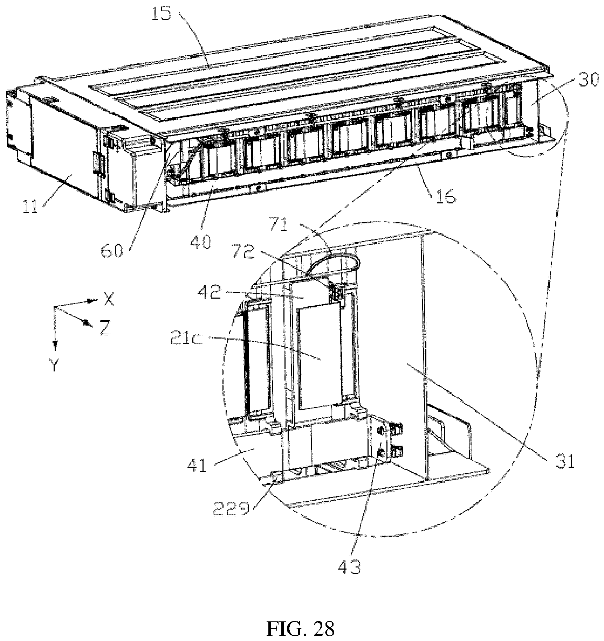

Referring to FIG. 28, in some embodiments, the first conductive member 40 includes a first fixed portion 43, where the first fixed portion 43 is connected to the first conductive portion 41, and the first fixed portion 43 is fixedly connected to the base portion 31 of the first elastic member 30 close to the first buffer member 101. Along the first direction X, a projection of the first fixed portion 43 is spaced apart from a projection of the cell housing 21a, so that the first conductive member 40 can be better stretched along the first direction X.

In some embodiments, along the first direction X, the buffer part 401 is closer to the first elastic member 30 than the second elastic member 50. Specifically, along the first direction X, a distance from the buffer part 401 to the first elastic member 30 close to the first buffer member 101 is greater than a distance from the buffer part 401 to the second elastic member 50 close to the second buffer member 102, further facilitating stretching of the buffer part 401.

In some embodiments, the battery module 100 includes a connecting terminal 103, and along the first direction X, the second elastic member 50 is located between the connecting terminal 103 and the first elastic member 30. An end of the first conductive portion 41 facing away from the second conductive portion 42 is connected to the connecting terminal 103, and the cell assembly 20 is connected to an external device via the connecting terminal 103.

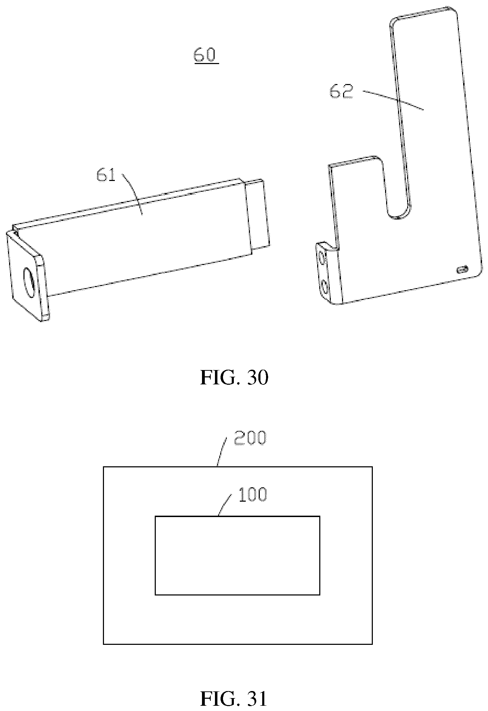

Referring to FIG. 5 and FIG. 30, in some embodiments, the battery module 100 includes a second conductive member 60. The second conductive member 60 has one end connected to an electrode terminal 21c of a cell 21 close to the second buffer member 102 and another end fixedly connected to the connecting terminal 103. The cell assembly 20 implements electrical energy reception or an output via the first conductive member 40 and the second conductive member 60. Optionally, the electrode terminal 21c connected to the first conductive member 40 and the electrode terminal 21c connected to the second conductive member 60 have opposite polarities.

In some embodiments, along the third direction Z, the first conductive member 40 and the second conductive member 60 are located on a same side of the cell assembly 20, facilitating spatial arrangement.

In some embodiments, the second conductive member 60 includes a third conductive portion 61 and a fourth conductive portion 62, where the third conductive portion 61 has one end fixedly connected to the connecting terminal 103 and another end connected to the fourth conductive portion 62. The fourth conductive portion 62 is fixedly connected to the base portion of the second elastic member 50, and the fourth conductive portion 62 is connected to an electrode terminal 21c of a cell 21 close to the second elastic member 50.

In some embodiments, the fourth conductive portion 62 is a hard copper bar, and the third conductive portion 61 is a soft copper bar, facilitating connection between the fourth conductive portion 62 and the electrode terminal 21c.

In some embodiments, the third conductive portion 61 and the fourth conductive portion 62 are connected by welding.

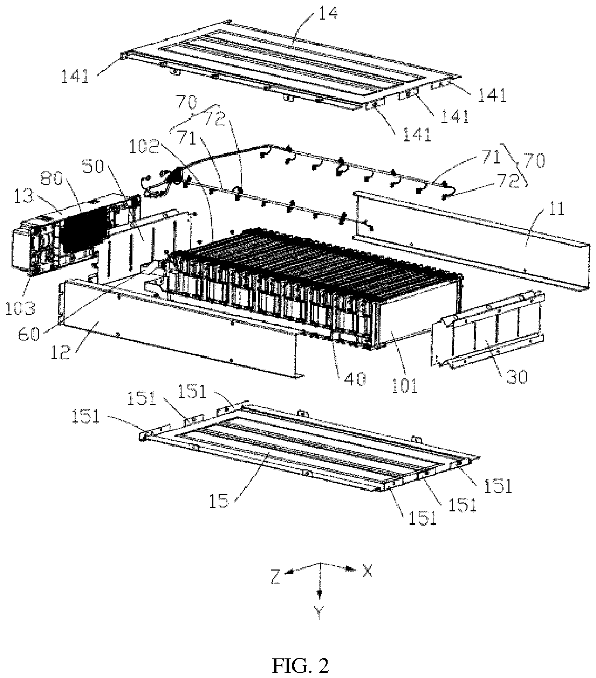

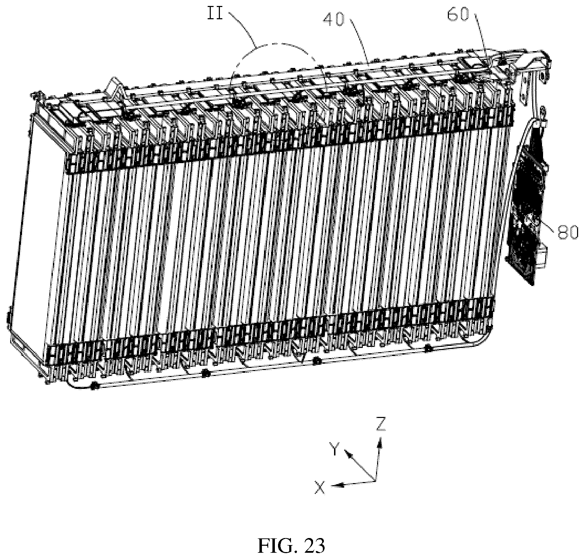

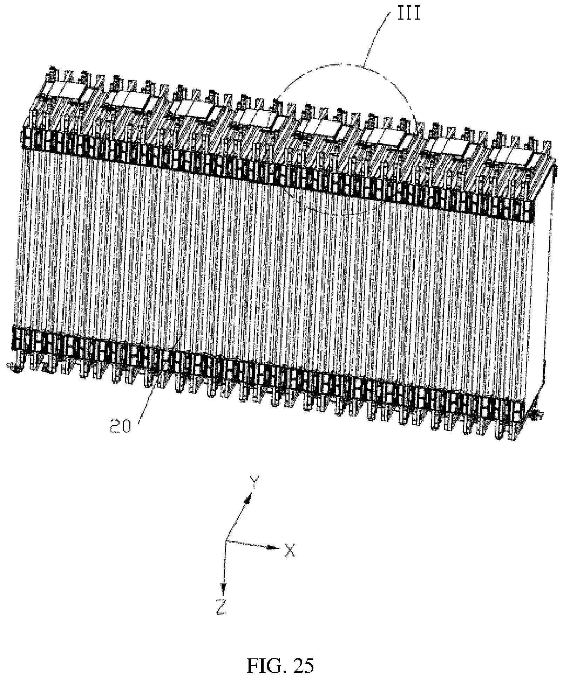

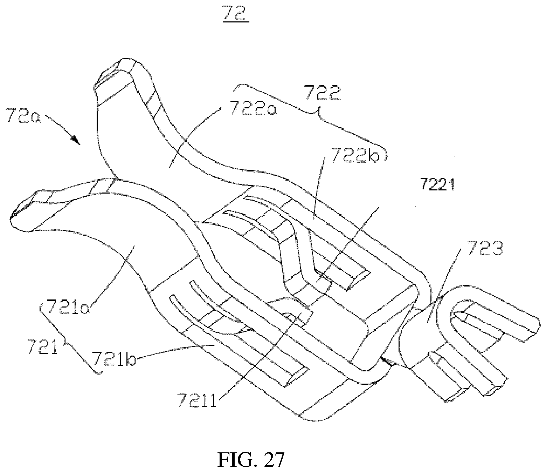

Referring to FIG. 2 and FIG. 23 to FIG. 27, in some embodiments, the battery module 100 includes an acquisition assembly 70, where the acquisition assembly 70 includes a wire 71 and a plurality of sampling members 72, and the wire 71 is connected to each sampling member 72. Optionally, the sampling member 72 is connected to the electrode terminal 21c. Optionally, the sampling member 72 is connected to the sixth portion 228 and an electrode terminal 21c of the sixth portion 228. The sampling member 72 is fixed to the sixth portion 228.

In some embodiments, the sixth portion 228 includes a first side surface 228a and a second side surface 228b disposed along a direction opposite to the third direction Z, where the first side surface 228a is farther away from the body portion 211 than the second side surface 228b. A side of the sampling member 72 is connected to the second side surface 228b. The electrode terminal 21c is located between the first side surface 228a and the sampling member 72.

In some embodiments, at least one of the first side surface 228a and the second side surface 228b is provided with a step portion 228c, and the sampling member 72 is connected to the step portion 228c, enhancing the connection strength between the sampling member 72 and the sixth portion 228 and reducing the risk of the sampling member 72 falling off the sixth portion 228.

Optionally, the first side surface 228a is provided with a step portion 228c, and the second side surface 228b is provided with a step portion 228c, further enhancing the connection strength between the sampling member 72 and the sixth portion 228 and further reducing the risk of the sampling member 72 falling off the sixth portion 228.

In some embodiments, the step portion 228c includes a first step surface 2281 and a second step surface 2282, where the first step surface 2281 and the second step surface 2282 are arranged along the second direction Y. Along the third direction Z, thickness of the first step surface 2281 is less than thickness of the second step surface 2282, so as to form the step portion 228c. A part of the sampling member 72 is connected to the first step surface 2281 and another portion connected to the second step surface 2282. Along the third direction Z, a projection of the first step surface 2281 overlaps a projection of the electrode terminal 21c, and the electrode terminal 21c is disposed at the first step surface 2281. Along the third direction Z, a projection of the second step surface 2282 is spaced apart from the projection of the electrode terminal 21c.

In some embodiments, the first step surface 2281 is provided with a first limiting portion 2281a, where the first limiting portion 2281a is obtained by recessing of the surface of the first step surface 2281. When the sampling member 72 is connected to the sixth portion 228, a part of the sampling member 72 is disposed at the first limiting portion 2281a, limiting separation of the sampling member 72 from the sixth portion 228 and enhancing the connection strength between the sampling member 72 and the sixth portion 228.

In some embodiments, along the third direction Z, a projection of the first limiting portion 2281a is spaced apart from the projection of the electrode terminal 21c, reducing the risk of the sampling member 72 pressing the electrode terminal 21c into the first limiting portion 2281a, and helping to protect the electrode terminal 21c.

In some embodiments, the bracket 22 includes two sixth portions 228, where the two sixth portions 228 are opposite each other along the second direction Y, facilitating position adjustment for the wire 71 and the sampling member 72 and facilitating spatial arrangement. Along the third direction Z, the projection of the electrode terminal 21c is located between projections of the first limiting portions 2281a of two sixth portions 228.

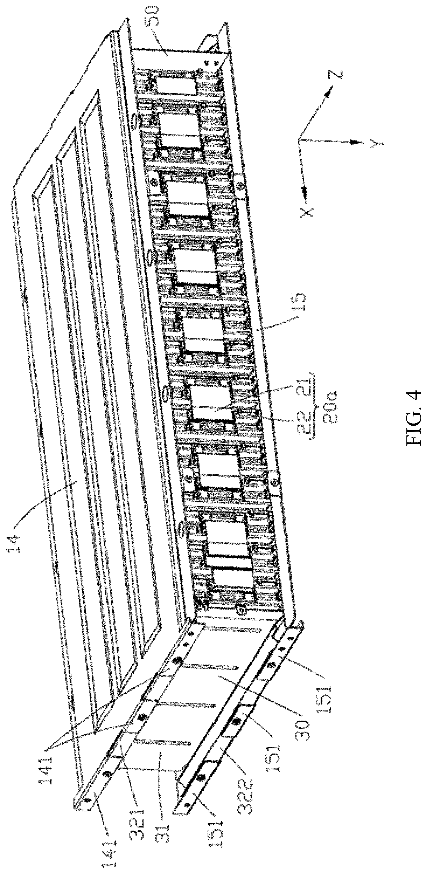

Referring to FIG. 4, FIG. 6, and FIG. 27, in some embodiments, the sampling member 72 includes a first component 721 and second component 722, where one end of the first component 721 is connected to one end of the second component 722, and another end of the first component 721 is separated from another end of the second component 722 to form an opening 72a. The first component 721 includes a first section 721a, and the second component 722 includes a second section 722a. The first section 721a is connected to the first side surface 228a, and the second section 722a is connected to the second side surface 228b. Optionally, the first section 721a is connected to the first step surface 2281 of the first side surface 228a, and the second section 722a is connected to the first step surface 2281 of the second side surface 228b.

In some embodiments, the first section 721a is bent toward the second section 722a, and the first section 721a is connected to the first step surface 2281. Through the first step surface 2281, the first section 721a can be limited, and thus the connection strength between the first section 721a and the step portion 228c can be enhanced. The first section 721a and the second section 722a form the opening 72a, and the second section 722a is bent toward the first section 721a, enhancing a clamping force between the first section 721a and the second section 722a and helping to enhance the connection strength between the sampling member 72 and the sixth portion 228, thereby enhancing the connection strength between the sampling member 72 and the electrode terminal 21c. A free end of the first section 721a bent away from the second section 722a, and a free end of the second section 722a is bent away from the first section 721a, enlarging the opening 72a, thereby allowing for a convenient connection between the sampling member 72 and the sixth portion 228.

In some embodiments, the first component 721 includes a third section 721b, where the third section 721b is connected to the first section 721a. The third section 721b is provided with a first bent portion 7211 bent toward a fourth section 722b. When the sampling member 72 is connected to the sixth portion 228, the first bent portion 7211 is disposed at the first limiting portion 2281a, and the first bent portion 7211 is configured to limit separation of the sampling member 72 from the sixth portion 228, enhancing the connection strength between the sampling member 72 and the sixth portion 228.

In some embodiments, the second component 722 includes a fourth section 722b, where the fourth section 722b is connected to the second section 722a. The fourth section 722b is provided with a second bent portion 7221 bent toward the third section 721b. When the sampling member 72 is connected to the sixth portion 228, the second bent portion 7221 is disposed at the first limiting portion 2281a, and the second bent portion 7221 is configured to limit separation of the sampling member 72 from the sixth portion 228, enhancing the connection strength between the sampling member 72 and the sixth portion 228.

In some embodiments, the first component 721 and the second component 722 are integrally formed, for example, integrally formed through punching.

In some embodiments, the sampling member 72 includes a third component 723. The third component 723 is connected to the first component 721 and/or the second component 722. The wire 71 is connected to the third component 723. The third component 723 can enhance the connection strength between the wire 71 and the sampling member 72 and also facilitates stretching of the wire 71 from the sampling member 72.

In an embodiment, the sampling member 72 can acquire electrical signal information of the cell 21, where the electrical signal information includes but is not limited to voltage, current, and temperature.

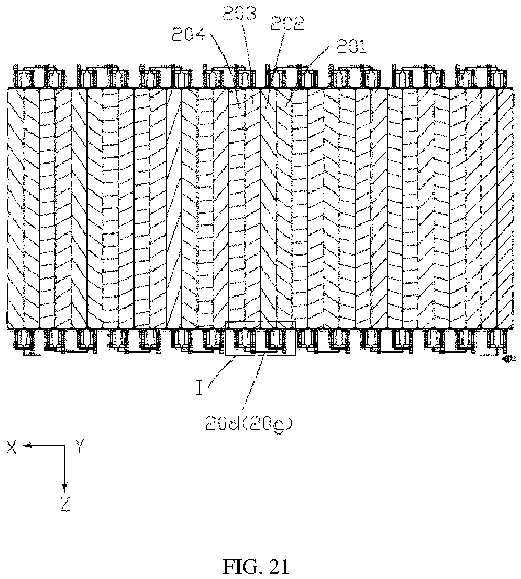

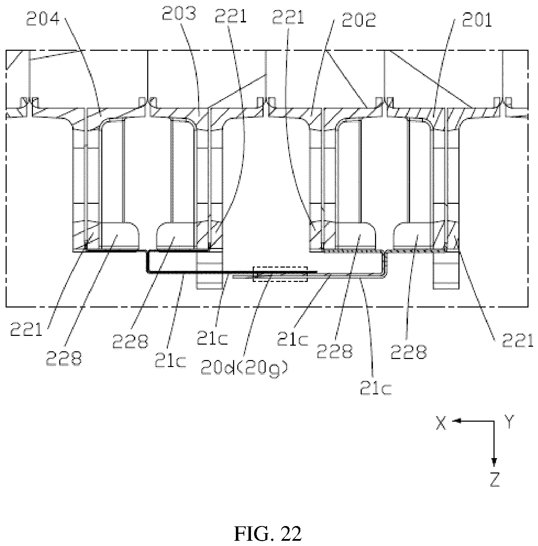

Referring to FIG. 21 to FIG. 23, in some embodiments, the sixth portion 228 and the first portion 221 are disposed along the first direction X, and along a direction opposite to the first direction X, the sixth portion extends from the first portion 221.

Referring to FIG. 21 to FIG. 26, in some embodiments, the cell assembly 20 includes a first cell unit 201 and a second cell unit 202, where the first cell unit 201 and the second cell unit 202 are adjacent to each other along the first direction X. An electrode terminal 21c of the first cell unit 201 is connected to an electrode terminal 21c of the second cell unit 202 in a folding manner. along the first direction X, a second space 20c is present between a bracket 22 of the first cell unit 201 and a bracket 22 of the second cell unit 202. A sixth portion 228 of the first cell unit 201 faces a sixth portion 228 of the second cell unit 202, and the sixth portion 228 of the second cell unit 202 faces the sixth portion 228 of the first cell unit 201.

Along the third direction Z, a projection of the sixth portion 228 of the first cell unit 201 is located within a projection of the second space 20c, and a projection of the sixth portion 228 of the second cell unit 202 is located within the projection of the second space 20c.

In some embodiments, the cell assembly 20 includes a third cell unit 203, where the second cell unit 202 and the third cell unit 203 are arranged adjacent to each other along the first direction X. A sixth portion 228 of the third cell unit 203 is away from a first portion 221 of the second cell unit 202. An electrode terminal 21c of the third cell unit 203 is connected to an electrode terminal 21c of the first cell unit 201 and/or an electrode terminal 21c of the second cell unit 202 in a folding manner. The electrode terminal 21c of the first cell unit 201 and the electrode terminal 21c of the second cell unit 202 are folded along the first direction X, and the electrode terminal 21c of the third cell unit 203 is folded along a direction opposite to the first direction X.

Optionally, the electrode terminal 21c of the third cell unit 203 is connected to the electrode terminal 21c of the first cell unit 201 and the electrode terminal 21c of the second cell unit 202 by welding. Optionally, welding includes laser welding, ultrasonic welding, and the like.

Along the third direction Z, the electrode terminal 21c of the first cell unit 201, the electrode terminal 21c of the second cell unit 202, and the electrode terminal 21c of the third cell unit 203 are stacked to form a first stack part 20d. Along the third direction Z, a projection of the first stack part 20d is located between a projection of the sixth portion 228 of the second cell unit 202 and a projection of the sixth portion 228 of the third cell unit 203, reducing interference caused by the sixth portion 228 to the first stack part 20d, and facilitating welding of the first stack part 20d.

Stacking is configured in various manners. For example, the electrode terminal 21c of the first cell unit 201 is located between the electrode terminal 21c of the second cell unit 202 and the electrode terminal 21c of the third cell unit 203. For example, the electrode terminal 21c of the second cell unit 202 is located between the electrode terminal 21c of the first cell unit 201 and the electrode terminal 21c of the third cell unit 203. For example, the electrode terminal 21c of the third cell unit 203 is located between the electrode terminal 21c of the first cell unit 201 and the electrode terminal 21c of the second cell unit 202. In some embodiments, along the third direction Z, a projection of the first stack part 20d is located between a projection of the sixth portion 228 of the second cell unit 202 and a projection of the sixth portion 228 of the third cell unit 203, facilitating welding.

In some embodiments, along the third direction Z, a projection of the first stack part 20d is located between a projection of a first portion 221 of the second cell unit 202 and a projection of a first portion 221 of the third cell unit 203, further facilitating welding of the first stack part 20d, and reducing influence on the bracket 22 during welding.

In some embodiments, along the first direction X, a third space 20e is present between a bracket 22 of the third cell unit 203 and a bracket 22 of the second cell unit 202. along the third direction Z, a projection of the first stack part 20d is located within a projection of the third space 20e, further reducing the interference caused by the sixth portion 228 to the first stack part 20d, and further facilitating welding of the first stack part 20d.

In some embodiments, the cell assembly 20 includes a fourth cell unit 204, where the third cell unit 203 and the fourth cell unit 204 are arranged adjacent to each other along the first direction X. The sixth portion 228 of the third cell unit 203 faces a sixth portion 228 of the fourth cell unit 204, and the sixth portion 228 of the fourth cell unit 204 faces the sixth portion 228 of the third cell unit 203.

Along the first direction X, a fourth space 20f is present between a bracket 22 of the third cell unit 203 and a bracket 22 of the fourth cell unit 204. Along the third direction Z, a projection of the sixth portion 228 of the third cell unit 203 is located within a projection of the fourth space 20f, and a projection of the sixth portion 228 of the fourth cell unit 204 is located within the projection of the fourth space 20f. The electrode terminal 21c of the fourth cell unit 204 is connected to the first stack part 20d in a folding manner to form an overlap part 20g. Optionally, the electrode terminal 21c of the fourth cell unit 204 may be disposed between the electrode terminals 21c in the first stack part 20d. Optionally, the electrode terminal 21c of the fourth cell unit 204 and the first stack part 20d are stacked in sequence.

In some embodiments, along the third direction Z, a projection of the overlap part 20g is located between the projection of the sixth portion 228 of the second cell unit 202 and the projection of the sixth portion 228 of the third cell unit 203, facilitating welding of the overlap part 20g.

In some embodiments, along the third direction Z, the projection of the overlap part 20g is located between the projection of the first portion 221 of the second cell unit 202 and the projection of the first portion 221 of the third cell unit 203, further facilitating welding of the first stack part 20d, and reducing influence on the bracket 22 during welding.

Optionally, along the third direction Z, the projection of the overlap part 20g is located within the projection of the third space 20e, further reducing the interference caused by the sixth portion 228 to the overlap part 20g, and further facilitating welding of the overlap part 20g.

In some embodiments, the electrode terminal 21c of the first cell unit 201 and the electrode terminal 21c of the second cell unit 202 are connected in parallel to form a first group of cells. The electrode terminal 21c of the third cell unit 203 and the electrode terminal 21c of the fourth cell unit 204 are connected in parallel to form a second group of cells. The first group of cells and the second group of cells are connected in series.

Referring to FIG. 2 and FIG. 5, in some embodiments, the battery module 100 includes a circuit board 80, where the circuit board 80 is disposed between the first side wall 11 and the second elastic member 50. The circuit board 80 is connected to the wire 71 and can receive data acquired by the sampling member 72. The circuit board 80 includes a BMS (Battery Management System) assembly. The BMS assembly includes a plurality of electronic elements, and the plurality of electronic elements can implement functions such as control, protection, communication, electrical quantity calculation, signal transmission, and electrical energy transmission for the cells 21. Optionally, the circuit board 80 includes a flexible printed circuit (FPC, Flexible Printed Circuit). Optionally, the circuit board 80 includes a printed circuit board (PCB, Printed Circuit Board), and the circuit board 80 is provided with a plurality of wires (not shown in the figure).

Referring to FIG. 31, this application further provides an electric device 200 using the foregoing battery module 100. In an embodiment, the electric device 200 in this application may be but is not limited to an electronic device, a drone, a backup power source, an electric vehicle, an electric motorcycle, an electric motor bicycle, an electric tool, and a large household battery module.

Persons of ordinary skill in the art should appreciate that the foregoing some embodiments are for description of this application only but not for limiting this application. Appropriate modifications and variations made to some embodiments without departing from the essential spirit and scope of this application all fall within the scope of this application.

## Claims

1. A battery module (100), comprising:
a housing (10);
a cell assembly (20) disposed in the housing (10), wherein the cell assembly (20) comprises a plurality of cell units (20a) arranged along a first direction (X), and each cell unit (20a) comprises a cell (21);
a first elastic member (30), wherein along the first direction (X), the first elastic member (30) is disposed between the cell assembly (20) and the housing (10), and the first elastic member (30) is configured to apply pressure to the cell assembly (20) and provide a swelling space for the cell (21); and
a first conductive member (40), wherein along the first direction (X), an end of the first conductive member (40) is fixedly connected to the first elastic member (30); wherein
the first conductive member (40) comprises a buffer part (401), wherein the buffer part (401) is configured to be stretched along the first direction (X) by the first elastic member (30) when the cell assembly (20) swells.

2. The battery module (100) according to claim 1, wherein the buffer part (401) comprises a first folded member (4011) and a second folded member (4012); the first folded member (4011) is connected to the second folded member (4012) to form a first included folding angle ( α ); and when the buffer part (401) is stretched, the first included folding angle ( α ) gradually increases.

3. The battery module (100) according to claim 1 or 2, wherein the first conductive member (40) is configured for electrical energy reception or an output of the cell assembly (20).

4. The battery module (100) according to claim 3, wherein the first conductive member (40) comprises a first conductive portion (41) and a second conductive portion (42); the buffer part (401) is disposed at the first conductive portion (41); the second conductive portion (42) is connected to an electrode terminal (21c) of a cell (21) closest to the first elastic member (30); and the second conductive portion (42) is connected to the first conductive portion (41).

5. The battery module (100) according to claim 4, wherein the first conductive member (40) comprises a first fixed portion (43); the first fixed portion (43) is connected to the first conductive portion (41); the first fixed portion (43) is fixed to the first elastic member (30);
along the first direction (X), a projection of the first fixed portion (43) is spaced apart from a projection of a cell housing (21a) of the cell (21).

6. The battery module (100) according to claim 4 or 5, wherein the first conductive portion (41) is more prone to folding than the second conductive portion (42).

7. The battery module (100) according to any one of claims 4 to 6, wherein the first conductive portion (41) comprises a first straight portion (411), and the buffer part (401) is disposed at the first straight portion (411).

8. The battery module (100) according to any one of claims 3 to 7, further comprising a second conductive member (60) and a second elastic member (50); wherein
the second elastic member (50) is disposed between the housing (10) and the cell assembly (20), and the second elastic member (50) and the first elastic member (30) are disposed on two opposite sides of the cell assembly (20) along the first direction (X); and
the second conductive member (60) is fixedly connected to the second elastic member (50), the second conductive member (60) is connected to an electrode terminal (21c) of a cell (21) closest to the second elastic member (50), and the cell assembly (20) implements electrical energy reception or an output via the first conductive member (40) and the second conductive member (60).

9. The battery module (100) according to claim 8, further comprising a connecting terminal (103), wherein the connecting terminal (103) is configured to be connected to an external device; and along the first direction (X), the second elastic member (50) is located between the connecting terminal (103) and the first elastic member (30); and
along the first direction (X), the buffer part (401) is closer to the first elastic member (30) than the second elastic member (50).

10. The battery module (100) according to any one of claims 1 to 9, wherein
the first elastic member (30) comprises a base portion (31) and a folded portion (32), the base portion (31) is connected to the folded portion (32), and the folded portion (32) is fixed to the housing (10); and
the base portion (31) is configured to be able to apply pressure to the cell unit (20a), and the folded portion (32) is configured to be able to provide a swelling space for the cell unit (20a).

11. The battery module (100) according to claim 10, wherein the folded portion (32) comprises a first folded portion (321) and a second folded portion (322), the first folded portion (321) is opposite to the second folded portion (322) along a second direction (Y), and the second direction (Y) is perpendicular to the first direction (X); and
the first folded portion (321) is connected to one side of the base portion (31), and the second folded portion (322) is connected to another side of the base portion (31).

12. The battery module (100) according to any one of claims 1 to 11, wherein each cell unit (20a) comprises a bracket (22); and the cell (21) comprises an electrode assembly (21b), a cell housing (21a), and an electrode terminal (21c) connected to the electrode assembly (21b) and extending out of the cell housing (21a);
the cell housing (21a) comprises a body portion (211) and a first sealing portion (212), the electrode assembly (21b) is disposed at the body portion (211), the first sealing portion (212) comprises a first connecting portion (212a), and the electrode terminal (21c) extends out of the cell housing (21a) from the first connecting portion (212a); and
the bracket (22) comprises a first portion (221), a part of the first connecting portion (212a) is covered by the first portion (221), at least one first portion (221) is provided with a limiting portion (229), and the first conductive member (40) is disposed on the limiting portion (229).

13. The battery module (100) according to claim 12, wherein the body portion (211) comprises a first wall (211c) and a second wall (211d) opposite to each other along a second direction (Y), the bracket (22) comprises a second portion (224), and at least a part of the first wall (211c) is covered by the first portion (221); and
the housing (10) comprises a top wall (14); the second portion (224) is connected to the top wall (14); the top wall (14), the second portion (224), and the cell unit (20a) are arranged along the second direction (Y); and along the first direction (X), the second portion (224) is configured to be movable relative to the top wall (14).

14. The battery module (100) according to any one of claims 12 to 13, wherein the bracket (22) is integrally formed with the cell.

15. An electric device (200), comprising the battery module (100) according to any one of claims 1 to 14.
